# EUROPEAN PATENT APPLICATION

(11) **EP 2 497 997 A1**
(43) Date of publication of application: **12.09.2012**
(21) Application number: 10828166.8
(22) Date of filing: 04.10.2010
(51) Int. Cl.: F21V 19/00, F21S 2/00, F21Y 103/00

(54) **LIGHTING DEVICE, DISPLAY DEVICE, AND TELEVISION RECEIVER**

(30) Priority: 06.11.2009 JP 2009255242
(71) Applicant: Sharp Kabushiki Kaisha, Osaka-shi, Osaka 545-8522 (JP)
(72) Inventor: KUROMIZU, Yasumori, Osaka-shi, Osaka 545-8522 (JP)
(74) Representative: Müller-Boré & Partner Patentanwälte
(86) International application number: PCT/JP2010/067341
(87) International publication number: WO 2011/055606

(57) **Abstract**

An objective of the present invention is to provide a proper light source holding function in a lighting device. A backlight unit 12 according to the present invention includes cold cathode tubes 18 as light sources and lamp holders 20. Each cold cathode tube 18 includes electrodes 18b in end sections 18E. The lamp holders 20 are covers that cover the end sections 18E of the cold cathode tubes 18. Light source holddown members 25 are arranged on the lamp holders 20. Each light source holddown member 25 projects from the lamp holder 20 toward the middle of the cold cathode tube 18 and holds down the middle section 18C rather than the electrode 18b. The middle section 18C of the cold cathode tube 18 held down by the light source holddown member 25 is lower in temperature than the end section 18E including the electrode 18b.

## Description

### TECHNICAL FIELD

The present invention relates to a lighting device, a display device and a television receiver.

### BACKGROUND ART

A liquid crystal panel included in a liquid crystal display device such as a liquid crystal television does not emit light. Therefore, a backlight device is required as an external lighting device for providing light to illuminate the liquid crystal display panel. A known backlight device includes a plurality of cold cathode tubes arranged parallel to one another and lamp holders covering ends of the cold cathode tubes.

### RELATED ART DOCUMENT

### Patent Document

Patent Document 1: Japanese Unexamined Patent Application Publication No. 2006-344602

### Problem to be Solved by the Invention

The lamp holders disclosed in Patent Document 1 have functions for covering ends of the cold cathode tubes and holding down the cold cathode tubes from the front side for retention. In recent years, the following improvements are expected: a reduction in the number of the cold cathode tubes to lower the cost while the display brightness is maintained at a certain level; and an increase in level of the display brightness. To accomplish the improvements, the luminance of each cold cathode tube needs to be increased. To increase the luminance of each cold cathode tube, a gas pressure and a tube current thereof need to be increased. However, when the gas pressure and the tube current are increased, an amount of heat generation by an electrode at the end of the cold cathode tube tends to increase and thus the electrode may be heated. In the configuration that the lamp holder holds down the end of the cold cathode tube having the electrode, the lamp holder may melt due to the heat transferred from the heated electrode. If that occurs, the lamp holder cannot properly function as a holder for holding the cold cathode tube.

### DISCLOSURE OF THE PRESENT INVENTION

The present invention was made in view of the foregoing circumstances. An object of the present invention is to provide a proper light-source holding function.

### Means for Solving the Problem

A lighting device according to the present invention includes a light source having an electrode at an end, a cover covering the end of the light source, and a light source holddown member. The light source holddown member is arranged on the cover so as to project toward a middle of the light source. The light source holddown member holds down the light source at a point closer to the middle of the light source than the electrode.

With this configuration, the light source is held down by the light source holddown member on the cover and retained. The light source has the electrode at the end. The electrode generates heat when a voltage is applied thereto. Therefore, the end tends to be higher in temperature than the middle section of the light source. This tendency becomes more distinguishable as the intensity increases. The light source holddown member on the cover according to the present invention projects toward the middle of the light source and holds down the light source at the point closer to the middle of the light source than the electrode. The middle portion of the light source is low in temperature relative to the end at which the electrode is arranged. Therefore, the light source holddown member holding down the light source is less likely to melt and thus the light source holding function is properly exerted.

The following configuration may be preferable as embodiments of the present invention.
(1) The light source holddown member may include a base section and a holddown section. The base section may project from the cover toward the middle of the light source and cover a part of the middle section of the light source. The holddown section may project from the base section toward a light source side and be in contact with the middle section of the light source. With this configuration, the light source can be retained.

(2) The holddown section may have a distal end with a contact area with the light source smaller than an area of another part thereof overlapping the light source. In comparison to a configuration in which the contact area with the light source at the distal end of the holddown section is substantially equal to the area of the other part overlapping the light source, a possibility that light emitted from the light source is reflected off the distal end of the holddown section and immediately returned to the inside of the light source can be reduced. The light returned to the light source may be absorbed by the light source itself. According to the present invention, the amount of light returned to the inside of the light source is small, as described above. Therefore, efficiency in extraction of light improves and brightness increases.

(3) The holddown section may have a tapered shape. In comparison to a holddown section formed in a stepped shape to make a contact area at the end smaller than another area overlapping the light source, the light emitted from the light source is less likely to be blocked by the holddown section. Therefore, efficiency in using emitted light improves.

(4) The distal end of the holddown section may not be pointy. In comparison to a pointy distal end, the light source is stably held down with the non-pointy distal end of the holddown section, which is in contact with the light source.

(5) The holddown section may have a four-sided pyramid-like shape. With the four-sided pyramid-like holddown section, the light source is properly held down.

(6) The holddown section may have a cone-like shape. Light reflected by the periphery of the holddown section in the cone-like shape travels radially. Namely, the reflected light is less likely to have directivity. Therefore, this configuration is preferable for reducing uneven brightness.

(7) The holddown section may include a column and a protrusion. The column may project from the base section and have a substantially constant thickness. The protrusion may be formed on a distal end of the column. Because the holddown section includes the column with the substantially constant thickness, size control required in production can be simplified and the holddown section can be produced at low cost.

(8) The column may have a cross-like cross section. The protrusion may have a rectangular cross section along any one of a long side and a short side of the cross section of the column. With the column formed in the shape with the cross-like cross section, the holddown section can have a sufficient strength. Moreover, the protrusion may have the rectangular cross section along any one of the long side and the short side of the cross section of the column. Namely, the holddown section may have a simple shape. Therefore, the production cost can be reduced.

(9) The protrusion may be a round portion with a round outer surface. With this configuration, the outer surface of the round portion is in point contact with the light source. Therefore, the contact area of the holddown section with the light source can be reduced as much as possible and thus the efficiency in extraction of light further improves.

(10) The column may have a round cross section with a diameter substantially equal to a diameter of the round portion. The substantially entire distal end surface of the column continues into the round portion, that is, is not exposed to the outside. Therefore, light is less likely to be blocked by the distal end surface of the column.

(11) The protrusion may include a pair of protrusions arranged away from each other at the distal end of the column. The light source is stably held down by the pair of protrusions arranged away from each other at the end of the distal end of the column. The light source holding function improves.

(12) The holddown section may have a fork-like shape and a pair of legs in contact with the light source. With this configuration, the light source is stably held down by the legs of the holddown section having the fork-like shape at points away from each other. Therefore, the light source holding function improves.

(13) Each of the legs may have a tapered shape. With this configuration, light emitted from the light source is less likely to be blocked by the legs. Therefore, the efficiency in using emitted light improves.

(14) The legs may be in contact with the cold cathode tube at points away from each other in a direction perpendicular to a direction in which the base section projects from the cover and a direction in which the holddown section projects from the base section. With this configuration, distances between the electrode and the respective legs are substantially equal. Therefore, thermal effects of the electrode to the legs are substantially equal.

(15) The holddown section may have a maximum dimension measuring in a direction in which the base section projects from the cover and a direction in which the holddown section projects from the base section. The maximum dimension may be smaller than the light source. In comparison to a holddown section having the same size as the light source, the holddown section is less likely to be an obstacle of emitted light from the light source.

(16) The electrode may be arranged such that at least a part thereof is closer to the middle of the light source than the cover. The base section may be arranged so as to overlap the electrode. At least the part of the electrode is arranged outside the cover but the base section of the holddown member is arranged so as to overlap the electrode. Therefore, the electrode is less likely to be exposed on the light exit side of the lighting device and thus the uneven brightness is less likely to occur.

(17) The base section may have a dimension measuring in a direction perpendicular to a direction in which the base section projects from the cover and a direction in which the holddown section projects from the base section. The dimension may be larger than the electrode. With this configuration, the electrode is further less likely to be exposed.

(18) The base section may be formed such that the dimension measuring in the direction perpendicular to the direction in which the base section extends from the cover and the direction in which the holddown section projects from the base section is larger than the light source. With this configuration, the electrode is least likely to be exposed.

(19) The base section may be formed such that the dimension measuring in the direction in which the base section projects from the cover and the direction in which the holddown section projects from the base section is large than the holddown section. Because the holddown section is covered by the base section, the holddown section is less likely to be exposed on the light emitting side of the lighting device. Therefore, the uneven brightness is less likely to occur.

(20) The base section may have an umbrella-like shape covering the holddown section. Because the base section in the umbrella-like shape covers the holddown section, the holddown section is further less likely to be exposed. In comparison to a base section having a flat plate-like shape, the base section has higher rigidity and thus a deformation such as a warp is less likely to occur in the base section. Therefore, the holddown section in contact with the light source is less likely to move and the light source is stably retained.

(21) The base section may have a surface on an opposite side from the light source shaped along an outline of the light source. Light reflected by the surface of the base section on the opposite side from the light source has the same directivity as light emitted from the light source. The base section functions as a pseudo light source. This configuration is preferable for reducing the uneven brightness.

(22) The base section may have a surface on a light source side formed along the outline of the light source. This makes the thickness of the base section substantially constant. Therefore, the base section has sufficient rigidity and the light source can be stably held.

(23) The base section may project closer to the middle of the light source than the holddown section. With the base section, the holddown section is less likely to be exposed on the light emitting side of the lighting device and thus the uneven brightness is less likely to occur.

(24) The cover may have an opening in a surface facing toward the middle of the light source at a location off at least the light source with respect to a direction perpendicular to a direction in which the light source holddown member projects from the cover and a direction in which the light source holding member and the light source are arranged. With this configuration, air flows between the inside and the outside of the cover through the opening. Therefore, heat generated by the electrode at the end of the light source can be efficiently released.

(25) The light source may include a plurality of light sources arranged parallel to one another in the direction perpendicular to the direction in which the light source holddown member projects from the cover and the direction in which the light source holddown member and the light source are arranged. The opening may be formed in an area extending over the adjacent light sources. With the opening formed in the area extending over the adjacent light sources, airflow between the inside and the outside of the cover can be accelerated. Namely, the lighting device exerts high heat dissipation performance.

(26) The opening may be formed in an area with a dimension same as a dimension of an area in which the light sources are arranged. The dimensions measure in the direction perpendicular to the direction in which the light source holddown member projects from the cover and the direction in which the light source holddown member and the light source are arranged. The opening may be formed such that a clearance is provided between an opening edge of the opening and the light sources with respect to the direction in which the light source holddown member and the light source are arranged.

(27) The light source may have an outer lead at the end. The outer lead may be connected to the electrode and project to the outside. The connector may be connected to the outer lead. With the holddown section holding down the light source, the connection between the outer lead and the connector can be stably maintained. Therefore, the light source can stably emit light.

(28) The connector may include a terminal in contact with the outer lead. The light source holddown member and the light source are arranged substantially along a direction in which the outer lead is inserted into or removed from the terminal. With the light source held down by the light source holddown member, the outer lead in contact with the terminal is less likely to come off in the direction along the insertion and removal direction of the outer lead.

(29) The lighting device may further include a chassis housing the light source and the cover. The light source may include a plurality of linear light sources arranged parallel to one another inside the chassis. The light source holddown member may include a plurality of light source holddown members arranged parallel to one another on the cover according to an arrangement of the linear light sources and attached to an end portion of the chassis. With the plurality of light source holddown members arranged parallel to one another according to the plurality of linear light sources, the linear light sources are properly held down by the respective light source holddown members and retained.

(30) The lighting device may further include an optical member. The chassis may have an opening through which light exits. The optical member may be arranged so as to cover the opening. The cover may have an optical member holding portion on which the optical member is placed. The optical member is supported by the optical member holding portion of the cover. This makes the distances between the optical member and the linear light sources are substantially constant.

(31) The cover may have light reflectivity. With this configuration, light is efficiently reflected by the surface of the cover. Therefore, the light use efficiency improves.

(32) The lighting device may further include a chassis housing the light source and the cover. The cover may have a sloped portion projecting toward the bottom surface of the chassis. With this configuration, light is efficiently reflected by the sloped portion toward the light emitting side.

To solve the problem described earlier, a display device according to the present invention includes the above lighting device and a display panel configured to provide display using light from the lighting device.

In the lighting device in such a display device, which supplies light to the display panel, a proper light source holding function is provided. Therefore, light is stably supplied to the display panel and the display device can provide good quality display.

An example of the display panel is a liquid crystal panel. Such a display device is applied to various uses such as a television or a desktop of a personal computer as a liquid crystal display device, and especially appropriate for a large-screen device.

### Advantageous Effect of the Invention

According to the present invention, a proper light source holding function can be provided.

### BRIEF DESCRIPTION OF THE DRAWINGS

FIG. 1 is an exploded perspective view illustrating a general construction of a television receiver according to a first embodiment of the present invention.
FIG. 2 is an exploded perspective view illustrating a general construction of a liquid crystal display device included in the television receiver.
FIG. 3 is a cross-sectional view of the liquid crystal display device along a long-side direction.
FIG. 4 is a plan view illustrating arrangements of cold cathode tubes and lamp holders relative to a chassis included in the liquid crystal display device.
FIG. 5 is a front view of the lamp holder.
FIG. 6 is a magnified cross-sectional view of a relevant part of the liquid crystal display device along the long-side direction.
FIG. 7 is a cross-sectional view along line vii-vii in FIG. 6.
FIG. 8 is a perspective view of a relevant part of a light source holddown member with a part thereof cut off.
FIG. 9 is a magnified plan view of a relevant part of the cold cathode tube and the light source holddown member illustrating an arrangement thereof.
FIG. 10 is a perspective view of a relevant part of a light source holddown member with a part thereof cut off according to a first modification of the first embodiment.
FIG. 11 is a magnified cross-sectional view of a relevant part of the liquid crystal display device along the long-side direction thereof according to a second modification of the first embodiment.
FIG. 12 is a magnified cross-sectional view of a relevant part of the liquid crystal display device along the short-side direction thereof according to a third modification of the first embodiment.
FIG. 13 is a perspective view of a relevant part of a light source holddown member with a part thereof cut off according to the second embodiment of the present invention.
FIG. 14 is a magnified cross-sectional view of a relevant part of a liquid crystal display device along the short-side direction thereof.
FIG. 15 is a perspective view of a relevant part of a light source holddown member with a part thereof cut off according to the third embodiment of the present invention.
FIG. 16 is a magnified cross-sectional view of a relevant part of a liquid crystal display device along the long-side direction thereof.
FIG. 17 is a cross-sectional view along line xvii-xvii in FIG. 16.
FIG. 18 is a perspective view of a relevant part of a light source holddown member with a part thereof cut off according to the fourth embodiment of the present invention.
FIG. 19 is a magnified cross-sectional view of a relevant part of a liquid crystal display device along the long-side direction thereof.
FIG. 20 is a cross-sectional view along line xx-xx in FIG. 19.
FIG. 21 is a perspective view of a relevant part of a light source holddown member with a part thereof cut off according to the fifth embodiment of the present invention.
FIG. 22 is a magnified cross-sectional view of a relevant part of a liquid crystal display device along the long-side direction thereof, and
FIG. 23 is a cross-sectional view along line xxiii-xxiii in FIG. 22.

### MODE FOR CARRYING OUT THE INVENTION

### <First embodiment>

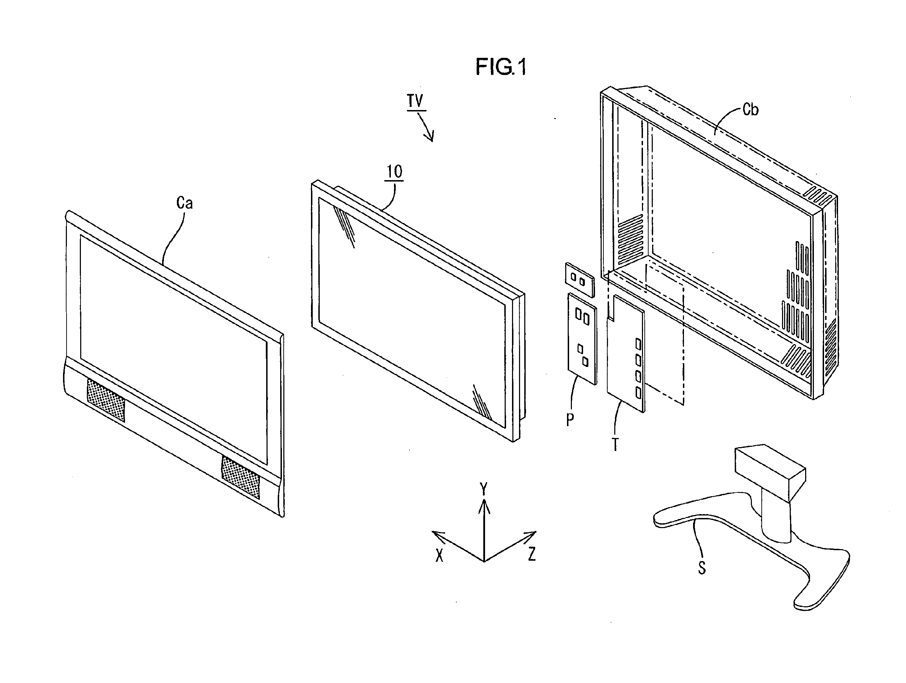

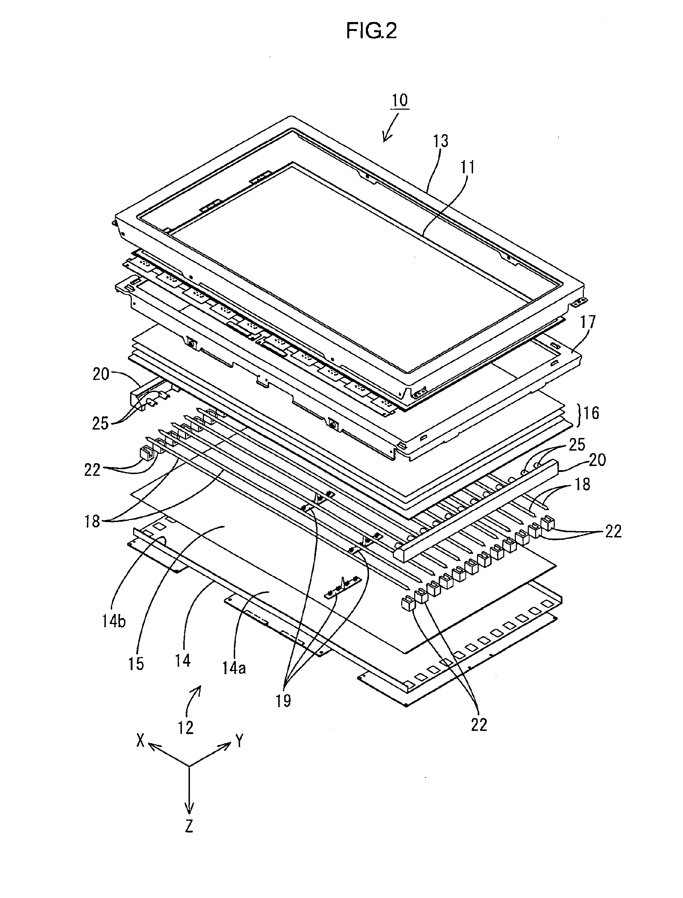

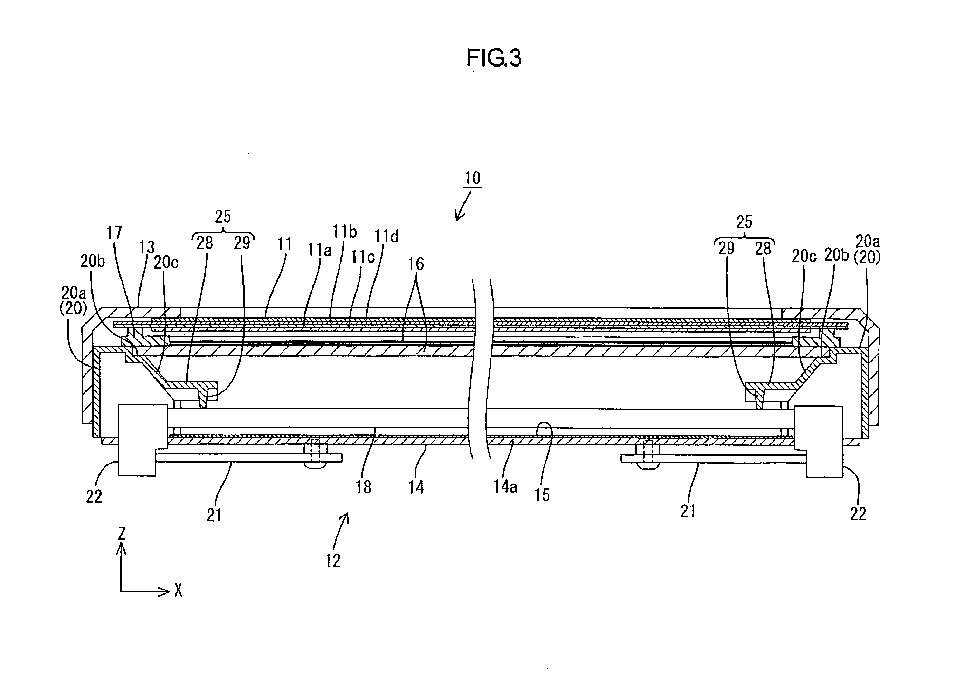

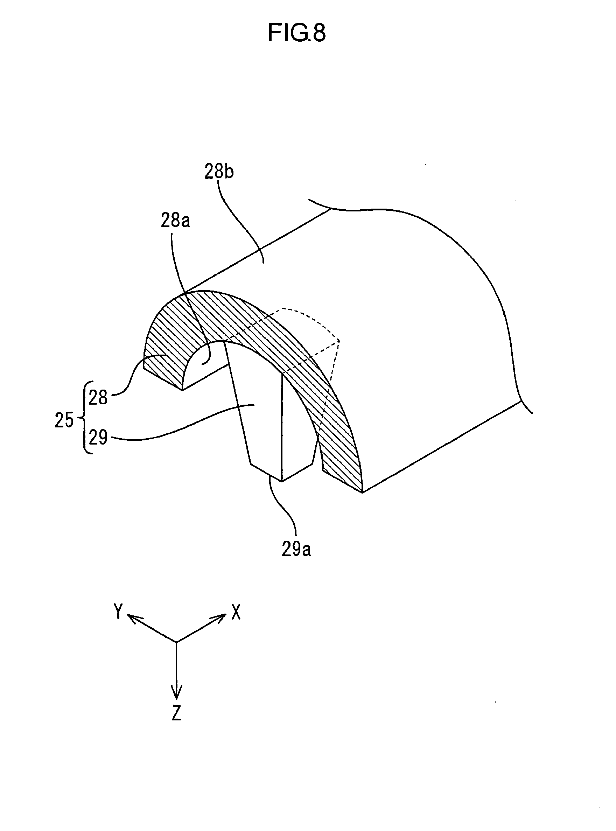

A first embodiment of the present invention will be explained with reference to FIGS. 1 to 9. In this description, a liquid crystal display device 10 will be illustrated. X-axes, Y-axes and Z-axes are indicated in some drawings. The axes in each drawing correspond to the respective axes in other drawings. The upper side and the lower side in FIGS. 2 and 3 correspond to the front side and the rear side, respectively.

As illustrated in FIG. 1, the television receiver TV of this embodiment includes the liquid crystal display device 10 (a display device), front and rear cabinets Ca, Cb that house the liquid crystal display device 10 therebetween, a power source P, a tuner T, and a stand S. An overall shape of the liquid crystal display device 10 is a landscape rectangular. As illustrated in FIG. 2, the liquid crystal display device 10 includes a liquid crystal panel 11 as a display panel, and a backlight unit 12 (a lighting device), which is an external light source. The liquid crystal panel 11 and the backlight unit 12 are integrally held by a bezel 13 having a frame-like shape.

Next, the liquid crystal panel 11 and the backlight unit 12 included in the liquid crystal display device 10 will be explained. The liquid crystal panel 11 has a rectangular plan-view shape. As illustrated in FIG. 3, glass substrates 11a and 11b are bonded together with a predetermined gap therebetween and a liquid crystal layer (not illustrated) is sealed between the glass substrates. On the glass substrate 11a, switching components (e.g. , TFTs) connected to source lines and gate lines that are perpendicular to each other, pixel electrodes connected to the switching components, and an alignment film are provided. On the substrate 11b, a color filter having color sections such as R (red), G (green) and B (blue) color sections arranged in a predetermined pattern, counter electrodes, and an alignment film are provided. Image data and various control signals are sent from a driving circuit board (not illustrated) to the source line, the gate lines, and the counter electrodes. Polarizing plates 11c and 11d are attached to outer surfaces of the substrates.

As illustrated in FIGS. 2 and 3, the backlight unit 12 includes a chassis 14, reflection sheet 15, an optical member 16, a frame 17, cold cathode tubes 18 (a light source), a lamp clips 19, and lamp holders 20. The chassis 14 has a box-like shape and an opening 14b on the front side (the light output side, the liquid crystal panel 11 side). The reflection sheet 15 is disposed in the chassis 14. The optical member 16 is arranged so as to cover the opening 14b of the chassis 14. The cold cathode tubes 18 are arranged parallel to one another in the chassis 14. The lamp clips 19 hold middle sections of the respective cold cathode tubes. The lamp holders 20 block light from the ends of the cold cathode tubes 18 and have light reflectivities. The backlight unit 12 further includes inverter boards 21 (a light source circuit board) and connectors 22. The inverter boards 21 are arranged on the backside of the chassis 14. The connectors 22 electrically connect the cold cathode tubes 18 with the inverter boards 22.

The chassis 14 is made of metal such as aluminum. The chassis 14 includes a bottom plate 14a having a rectangular shape similar to the liquid crystal panel 11. Furthermore, side plates rise from outer edges of the bottom plate 14a. The bottom plate 14a is arranged with the long-side direction and the short-side direction thereof aligned with the X-axis direction and the Y-axis direction indicated in the drawings, respectively. The bottom plate 14a is arranged opposite the cold cathode tubes 18 in the rear. Namely, the bottom plate 14a is arranged on a side opposite to the light output side with respect to the cold cathode tubes 18. The reflection sheet 15 is made of synthetic resin in white having a high light reflectivity and disposed to as to cover a substantially entire inner surface of the bottom plate 14a. The reflection sheet 15 is configured to reflect light from the cold cathode tubes 18 toward the optical member 16 (the light output side).

The optical member 16 has a rectangular plan-view shape similar to the bottom plate 14a and the liquid crystal panel 11. The optical member 16 is made of synthetic resin capable of light transmission and arranged between the cold cathode tubes on the rear side and the liquid crystal panel 11 on the front side. The optical member 15 includes a diffuser plate, a lens sheet, and a brightness-enhancement sheet. The optical member 15 is configured to convert light emitted from the cold cathode tubes 18 that are linear light sources to planar light with even intensity.

The frame 17 has a frame-like shape along the outer edges of the liquid crystal panel 11 and the optical member 16. The frame 17 is arranged on the front side of the optical member 16. The outer edges of the optical member 16 are sandwiched between the frame 17 and the side plates of the chassis 14 or the lamp holders 20. The frame 16 supports the liquid crystal panel 11 from the rear side. The outer edges of the liquid crystal panel 11 are sandwiched between the frame 17 and the bezel 13 that is arranged on the front side.

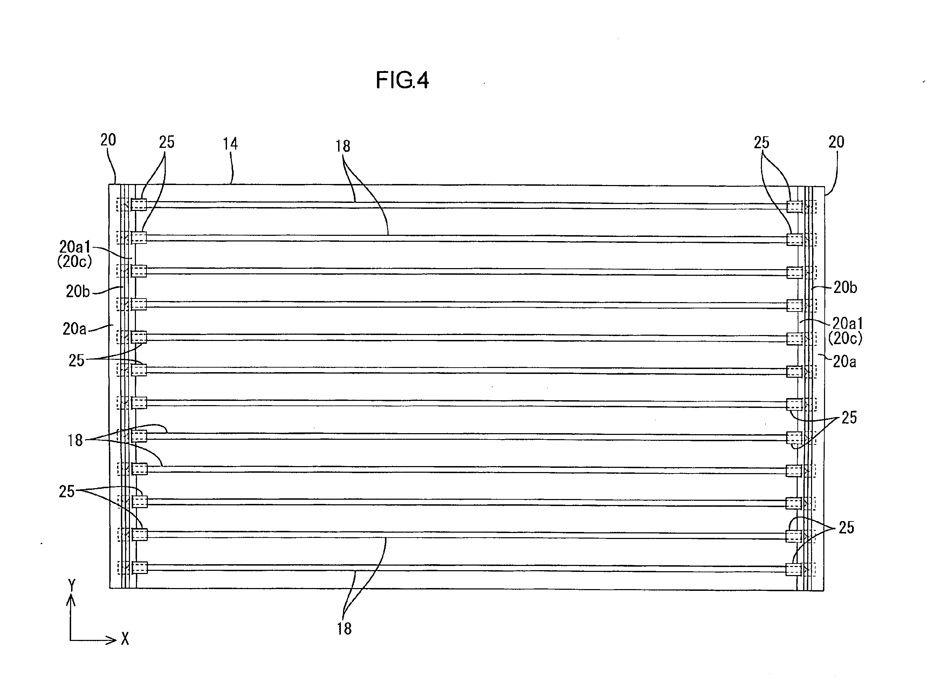

The cold cathode tubes 18 are one kind of linear light sources (tubular light sources). As illustrated in FIG. 4, the cold cathode tubes 18 are installed in the chassis 14 with the axial direction thereof aligned with the long-side direction of the chassis 14 (i.e., the X-axis direction). The cold cathode tubes 18 are arranged away from each other in the short-side direction of the chassis 14 (i.e. , the Y-axis direction) with the axes thereof substantially parallel to one another and at specific intervals. End sections 18E of the cold cathode tubes 18 are arranged along the short sides of the chassis 14 in end areas of the chassis 14 close to the short sides. The intervals or spacing between the cold cathode tubes 18 are substantially equal.

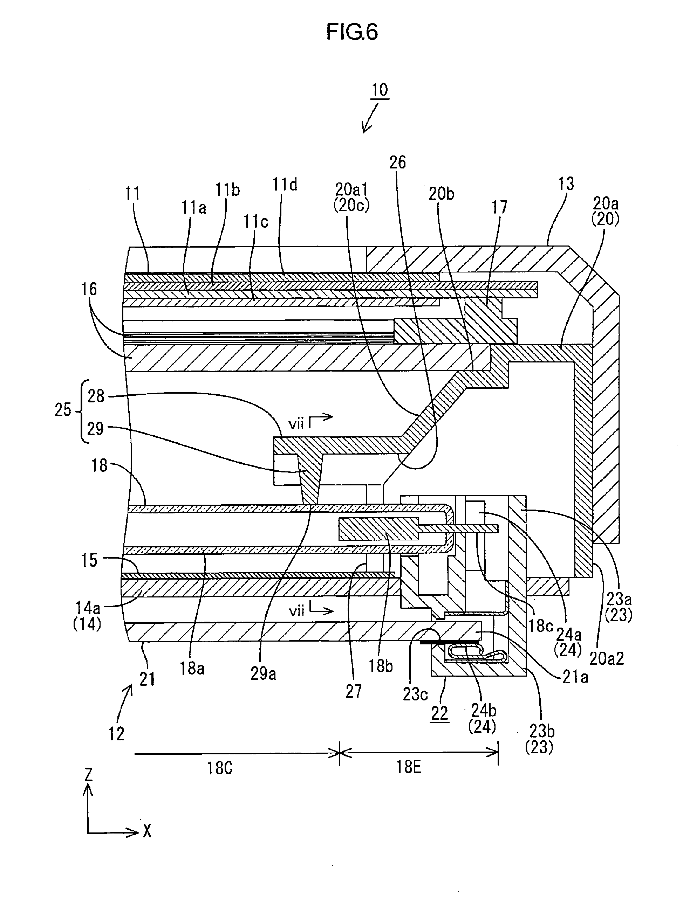

The cold cathode tubes 18 are one kind of discharge tubes. As illustrated in FIG. 6, each cold cathode tube 18 includes an elongated glass tube 18a, a pair of electrodes 18b enclosed in the glass tube 18a, and a pair of electrodes 18c projecting from the respective ends of the glass tube 18a. The electrodes 18b are arranged around the respective ends of the glass tube 18a. The cold cathode tube 18 is a so-called straight tube-type discharge tube in which the glass tube 18a has a linear shape and the electrodes 18b are separated in opposite directions (toward right and toward left, respectively, in FIGS. 3 and 4). A luminescent substance, such as mercury, is sealed in the glass tube 18a and a fluorescent substance is applied to the inner surface of the glass tube 18a. The luminescent substance and the fluorescent substance are not illustrated in the drawings. Each electrode 18b and each outer lead 18c are made of metal having electrical conductivity. An alloy having high tolerance to sputtering is especially suitable for the electrode 18b. The electrode 18b has an elongated cup-like shape extending along the axis of the glass tube 18a (along the X-axis direction or the longitudinal direction). The electrode 18b is arranged around the end of the glass tube 18a and housed therein. The outer lead 18c has an elongated post-like shape. The outer lead 18c penetrates through the end wall of the glass tube 18a and projects outward in the axial direction of the glass tube 18a. The inner end of the outer lead 18c located inside the glass tube 18a is connected to the electrode 18b. Therefore, the electrode 18b and the outer lead 18c are at the same potential.

Each cold cathode tube 18 has a middle section 18C and a pair of end sections 18E. The middle section 18C is located between edges of the electrode on sides away from the respective outer leads 18c (the edges on inner sides) to the middle of the cold cathode tube 18. Namely, the middle section 18C is located on the inner side than the electrodes 18b. The end sections 18E are located on the outer sides than the middle section 18C. The middle section 18C is a stable-light-emitting section at which stable intensity can be achieved. Each of the end sections 18E is a non-stable-light-emitting section at which intensity is lower than the middle section or uneven. The electrodes 18b in the end sections 18E are viewed from the outside as dark spots. This is a main reason why the end sections 18E become non-stable-light-emitting sections. A boundary between the middle section 18C and each end section 18E of the cold cathode tube 18 is closer to the middle than lamp holders 20, which will be explained later. Namely, a part of each electrode 18b projects from the lamp holder 20 toward the middle of the cold cathode tube 18.

Each lamp clip 19 is made of synthetic resin in white having high light reflectivity. As illustrated in FIG. 2, the lamp clips 19 are dispersed on the inner surface of the bottom plate 14a of the chassis 14 with a specific distribution. Each lamp clip 19 is fixed to the bottom plate 14a of the chassis 14 and configured to hold the middle section 18C of the corresponding cold cathode tube 18 other than the end sections 18E of the cold cathode tube 18. With the lamp clips 19, the cold cathode tubes 18 are held at a constant distance from the bottom plate 14a of the chassis 14.

Each lamp holder 20 is made of synthetic resin in white having high light reflectivity. As illustrated in FIGS. 2 and 4, each lamp holder 20 extends along the short side of the chassis 14 and includes a main body 20a having a box-like shape with an opening in the back surface. The lamp holders 20 are provided in a pair and mounted to edge portions of the chassis 14 at the long-side ends. The lamp holders 20 collectively cover the respective end sections 18C (non-stable-light-emitting portions) of the respective cold cathode tubes 18 arranged parallel to one another at the long-side ends. As illustrated in FIG. 3, the main body 20a of each lamp holder 20 has a step on the front side. The step is an optical member holding portion 20a on which the optical member 16 is placed. The main body 20a of the lamp holder 20 also has a sloped portion 20c sloped from the optical member holding portion 20b toward the bottom plate 14a of the chassis 14. The detailed configuration of the lamp holders 20 will be explained later.

Each inverter board 21 includes a synthetic resin substrate (e.g., a phenolic paper substrate or a glass epoxy substrate) on which specific circuit patterns are formed and various kinds of electronic components including transformers are mounted. The circuit patterns and the electronic components are not illustrated in the drawings. The inverter board 21 is connected to a power supply P of the liquid crystal display device 10. The inverter board 21 is configured to step up an input voltage from the power supply P such that an output voltage higher than the input voltage is applied to the cold cathode tubes 18. Namely, the inverter board 21 has a function for controlling on and off of the cold cathode tubes 18. As illustrated in FIG. 3, the inverter boards 21 are mounted to the back surface of the bottom plate 14a of the chassis 14 (a surface opposite from the surface on which the cold cathode tubes 18 are arranged) with a pair of screws at long-side ends of the chassis 14. Each inverter board 21 has connector connecting portions 21a individually connected to connectors 22, which will be explained next. The connector connecting portions 21a are located at an edge of the inverter board 21.

As illustrated in FIGS. 3 and 4, the connectors 22 are arranged at locations corresponding to the ends of the cold cathode tubes 18, that is, at the long-side ends of the bottom plate 14a of the chassis 14. Moreover, the connectors 22 are arranged along the short sides of the bottom plate 14a (the Y-axis direction, the direction in which the cold cathode tubes 18 are arranged parallel to one another). Multiple numbers (the same number as the cold cathode tubes 18) of the connectors 22 are arranged along the respective short sides of the bottom plate 14a. The intervals of the connectors 22 are the same as those of the cold cathode tubes 18. The Y-axis positions of the connectors 22 are set at substantially equal to those of the cold cathode tubes 18.

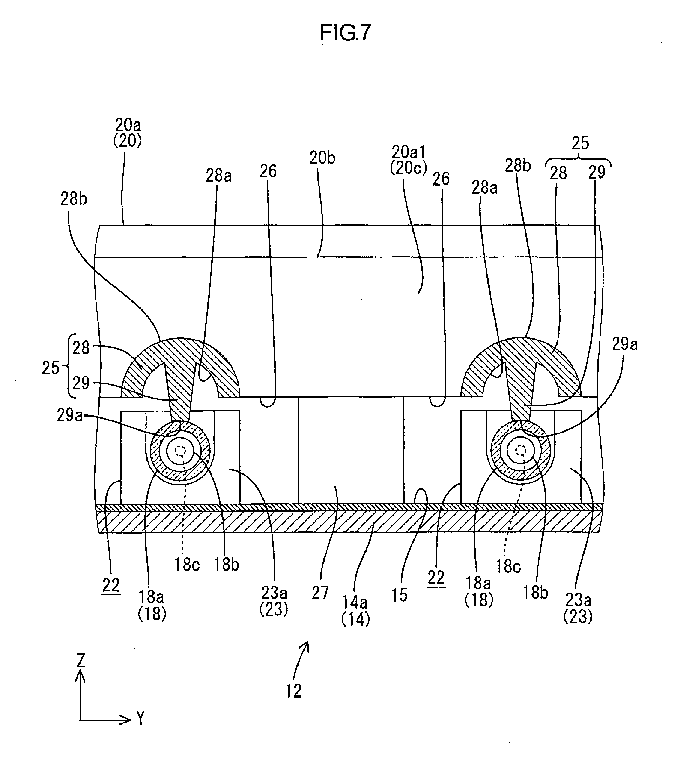

As illustrated in FIG. 6, each connector 22 includes a housing 23 having a block-like overall shape and a terminal 24. The housing 23 is made of synthetic resin having insulation properties. The connectors 22 are passed through the bottom plate 14a of the chassis 14 and mounted thereto. Each housing 23 includes a light source receiving portion 23a and a board receiving portion 23b. The light source receiving portion 23a is arranged inside the chassis 14 and receives an end of the corresponding cold cathode tube 18. The board receiving portion 23b is arranged outside the chassis 14 and receives the connector connecting portion 21a of the corresponding inverter board 21. The light source receiving portion 23a has a half-round groove shape along the end portion of the cold cathode tube 18 (see FIG. 7). The board receiving portion 23b has a board insertion hole 23c such that the board receiving portion 23b opens through the X-axis direction toward the inverter board 20. The terminal 24 has an end arranged in the light source receiving portion 23a and an end arranged in the board receiving portion 23b. The end in the light source receiving portion 23a is a light source contact portion 24a that is in contact with an outer lead 18c of the cold cathode tube 18. The end in the board receiving portion 23b is a board contact portion 24b that is in contact with the connector connecting portion 20a. The light source contact portion 24a and the board contact portion 24b have spring characteristics and are elastically in contact with the outer lead 18c and the connector connecting portion 20a, respectively. The light source contact portion 24a has a pair of sections facing each other in the Y-axis direction and elastically hold the outer lead 18c therebetween. The outer lead 18c is inserted into or removed from the light source contact portion 24a along the Z-axis direction. The connector connecting portion 20a is inserted into or removed from the board contact portion 24b along the X-axis direction. An output voltage of the inverter board 21 is applied to the outer lead 18c and the electrode 18b of the cold cathode tube 18 via the connector 22.

Electrical connection of each cold cathode tube 18 is established when the outer lead 18c is brought into contact with the terminal 24 of the connector 22. To achieve stable connection, the cold cathode tube 18 needs to be held so as not to come off from the connector 22. While the cold cathode tube 18 is turned on, a leak current flows from the cold cathode tube 18 to the bottom plate 14a of the chassis 14. To stabilize the leak current, a positional relationship between the cold cathode tube 18 and the bottom plate 14a of the chassis 14 with respect to the Z-axis direction needs to be constant. Therefore, the cold cathode tube 18 needs to be held at a specific position with respect to the Z-axis direction. In a known technology, the end 18E of each cold cathode tube 18 is directly held down by the main body of the lamp holder. If a larger amount of tube current is supplied to the cold cathode tube 18 to increase the luminance thereof, an amount of heat generated by the electrode 18b tends to increase. If the end 18E of the cold cathode tube 18 is directly held down by the main body of the lamp holder as in the know technology, the lamp holder may melt due to the heat generated by the electrode 18b.

Light source holddown members 25 are provided on the lamp holders 20. As illustrated in FIG. 6, each light source holddown member 25 projects toward the middle of the cold cathode tube 18 and holds down the meddle section 18C of the cold cathode tube 18 rather than the electrode 18b. The middle section 18C of the cold cathode 18 is lower in temperature than the end section 18E in which the electrode 18b is arranged. Therefore, the light source holddown member 25 holding down the middle section 18C is less likely to be melted. The configuration of light source holding portion 25 will be explained next together with the configuration of the main body 20a of the lamp holder 20.

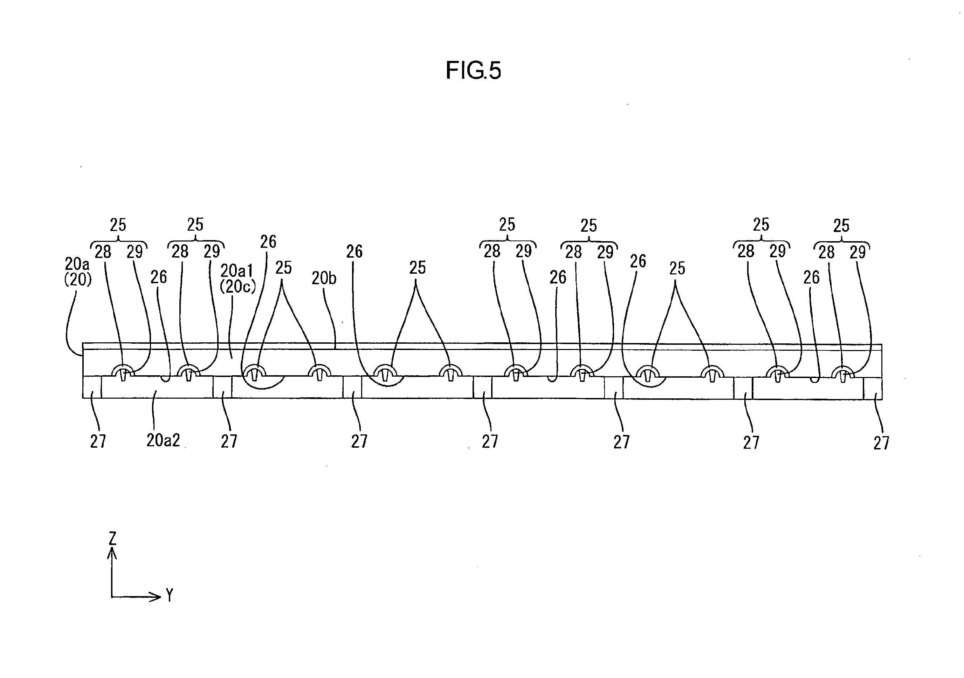

First, the configuration of the main body 20a will be explained in detail. As illustrated in FIGS. 4 and 5, the main body 20a has a length similar to the length of the short side of the chassis 14. The main body 20a has a pair of sidewalls 20a1 and 20a2 extending in the length direction (the Y-axis direction) . The sidewall 20a1 of the pair of sidewalls 20a1 and 20a2, which is on an inner side or closer to the middle of the cold cathode tube 18, includes the optical member holding portion 20b and the sloped portion 20c as illustrated in FIGS. 5 and 6. The outer sidewall 20a2 on the opposite side is a flat vertical wall extending for an entire length thereof along the Z-axis direction. The inner sidewall 20a1 has openings 26 for passing the cold cathode tubes 18 and for airflow between the inside and the outside of the main body 20a. The openings 26 are formed by cutting out specific backside sections of the sidewall 20a1 leaving the front side section in which the optical member holding portion 20b and the sloped portion 20c are provided. The openings 26 are formed in a larger area than an area of a plane of the wall surface of the sidewall 20a1, that is, a Y-Z plane in which the cold cathode tubes 18 are arranged. Specifically, the openings 26 (six openings in FIG. 5) are arranged along the Y-axis direction parallel to one another and separately from one another. Parts of the backside sections of the sidewall 20a1 are left and provided as support walls 27 for supporting the main body 20a. A width of each opening 26 measuring in the Y-axis direction is larger than an interval between the adjacent cold cathode tubes 18, that is, the opening 26 extends over an arrangement area of two cold cathode tubes 18. A height of each opening 26 measuring in the Z-axis direction is larger than the outer diameter of the cold cathode tube 18. Therefore, a clearance is provided between an opening edge of the opening 26 and cold cathode tube 18 mounted to the chassis 14. Namely, the opening edge of the opening 26 in the main body 20a does not touch the cold cathode tube 18. Through openings 26 having such areas, air flows between the inside and the outside of the main body 20a. With this configuration, heat generated by the end section 18E of the cold cathode tube 18 is less likely to stay inside the main body 20a. The electrode 18b of each cold cathode tube 18 projects further toward the inner side (toward the center) than the support wall 27 that is located on the most inner side among parts of the main body (see FIG. 6).

Next, the light source holddown members 25 will be explained in detail. Each light source holddown member 25 is integrally provided with the inner sidewall 20a1 of the main body 20a of the lamp holder 20. As illustrated in FIGS. 6 and 7, the light source holddown member 25 includes a base section 28 and a holddown section 29. The base section 28 has a roof-like shape so as to project from the sidewall 20a1 of the main body 20a toward the middle of the cold cathode tube 18 along the X-axis direction and to cover a part of the middle section 18C of the cold cathode tube 18. The holddown section 29 projects from the base section 28 toward the cold cathode tube 18 along the Z-axis direction. The holddown section 29 is in contact with the middle section 18C of the cold cathode tube 18.

The base section 28 has a curved shape with an arch-like cross section cut along a direction perpendicular to a direction in which the base section 28 projects from the sidewall 20a1 (along a Y-Z plane defined by the width direction and the thickness direction perpendicular to the X-axis direction). An inner surface 28a on the backside (an opposed surface to the cold cathode tube 18) and an outer surface 28b on the front side (a surface away from the cold cathode tube 18 or an opposed surface to the optical member 16) are formed along an outline of the cold cathode tube 18. The base section 28 has a substantially constant thickness along an entire width thereof. Furthermore, a distance from the cold cathode tube 18 to the inner surface 28a of the base section 28 is substantially constant along the entire width. A base end of the base section 28 continues into the edge of the opening 26 and the edge of the opening 26 at the joint is formed in an arc-like shape along an outline of the base section 28. The base section 28 is arranged such that a distal end thereof projecting from the sidewall 20a1 is closer to the middle of the cold cathode tube 18 than the electrode 18b or the holddown section 29. The width of the base section 28 measuring in the Y-axis direction is larger than a dimension of the holddown portion 29 measuring in the same direction. The base section 28 has an umbrella-like shape so as to cover the holddown section 29. The holddown section 29 is hide by the base section 28 having such a shape when viewed from the front. Therefore, the holddown section 29 is less likely to be recognized as a dark spot. The width of the base section 28 is larger than the width of the electrode 18a and the outer diameter of the cold cathode tube 18. Therefore, the base section 28 covers an entire corresponding part of the cold cathode tube 18 including the electrode 18 with respect to the Y-axis direction when viewed in plan. With the base section 28, a part of the end section 18E of the cold cathode tube 18 projecting from the main body 20a of the lamp holder 20 (from the support wall 27) toward the middle is hidden when vied from the front. Therefore, the entire end section 18E (including the electrode 18b), which is a non-stable-light-emitting portion, is less likely to be exposed to the front.

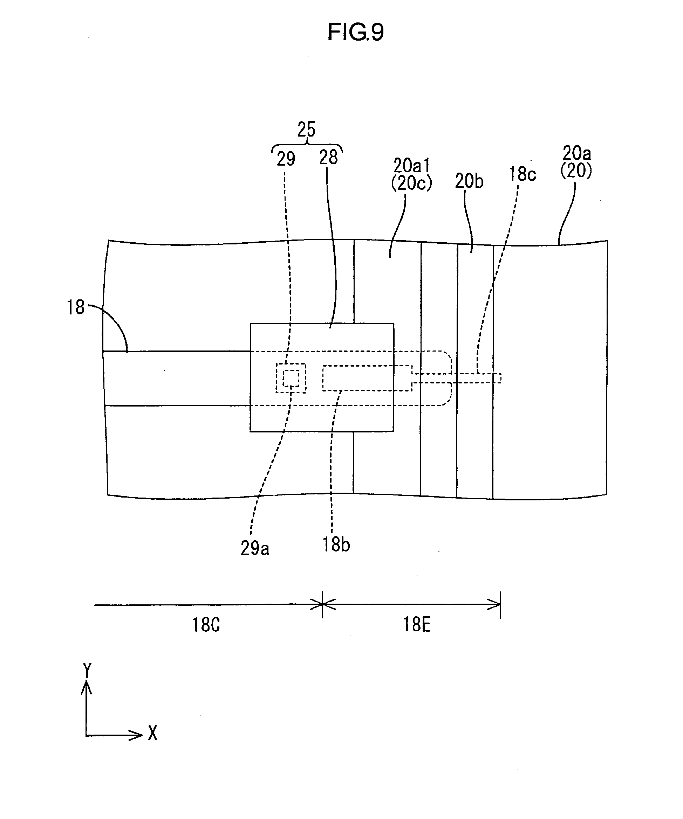

As illustrated in FIGS. 6 to 8, each holddown section 29 gradually narrows from the base section 28 side to the cold cathode tube 18 side, that is, the holddown section 29 has a so-called taper shape. Specifically, the holddown section 29 has a four-sided pyramid-like shape. A tip of the holddown section 29 is chamfered and a distal end surface 29a is a substantially flat surface having a specified area. Namely, the shape of the distal end of the holddown section 29 is not pointy but substantially truncated four-sided pyramid. The distal end surface 29a of the holddown section 29 is a contact surface that is in contact with the cold cathode tube 18. The base end of the holddown section 29 continues into the base section 28 at the middle of the width of the base section 28. The holddown section 29 has the smallest X dimension and Y dimension at the base end and the smallest X dimension and Y dimension at the distal end. The cross section of the holddown section 29 cut along a plane perpendicular to the direction in which the holddown section 29 projects (the Z-axis direction), or the X-Y plane, is the largest at the base end and the distal end surface 29a is the smallest. As illustrated in FIG. 9, the contact area of the holddown section 29 (i.e. , the area of the distal end surface 29a), which is in contact with the cold cathode tube 18, is smaller than a cross section of any other areas of the holddown section 29, that is, an area overlapping the cold cathode tube 18. The largest Y dimension of the holddown section 29 (measuring in the direction perpendicular to the direction in which the base section 28 projects from the lamp holder 20 and the direction in which the holddown section 29 projects from the base section 28), that is, the Y dimension at the base end is smaller than the Y dimension of the base section 28 and the outer diameter of the cold cathode tube 18.

As illustrated in FIG. 6, the distal end surface 29a of the holddown section 29 is in contact with the cold cathode tube 18 on the front side. The distal end surface 29a is in contact with the middle section 18C of the cold cathode tube 18 closer to the end section 18E with respect to the X-axis direction and a predetermined distance away from the electrode 18b (i.e., at an offset position). As illustrated in FIG. 7, the distal end surface 29a of the holddown section 29 is in contact with the cold cathode tube 18 from the front side. The distal end surface 29a is in contact with the middle of the Y-axis dimension of the cold cathode tube 18, that is, at substantially the same position as the outer lead 18c with respect to the Y-axis direction. Namely, the center of the holddown section 29 and the center of the cold cathode tube 18 with respect to the Y-axis direction are substantially aligned, that is, the holddown section 29 and the outer lead 18c are arranged parallel to each other substantially in the same line along the Z-axis direction. The arrangement direction of the cold cathode tube 18 (or the outer lead 18c) and the holddown section 29 is substantially aligned with the Z-axis direction, that is, the direction in which the outer lead 18c is inserted into or removed from the connector 22. With the holddown section 29 holding down the cold cathode tube 18 from the front side, the end section 18E (or the outer lead 18c) of the cold cathode tube 18 is less likely to come off from the connector 22. With this configuration, the end section 18E is properly retained in the connector 22.

The configurations of the liquid crystal display device 10 have been described above. Next, operations of the liquid crystal display device 10 will be explained. In the process of manufacturing the liquid crystal display device 10, the liquid crystal panel 11, the backlight unit 12 and the bezel 13 manufactured separately are assembled. A process of manufacturing the backlight unit 12 will be explained below.

The connectors 22 and the lamp clips 19 are mounted to the chassis 14 and the reflection sheet 15 is placed. Then, the cold cathode tubes 18 are installed in the chassis 14. When the cold cathode tubes 18 are mounted, the end sections 18E are inserted into the light source receiving portion 23a of the housings 23 of the connectors 22 along the Z-axis direction. Furthermore, each outer lead 18c is sandwiched between the sections of the light source contact portion 24a of the terminal 24 and elastically in contact therewith (see FIG. 6).

After all the cold cathode tubes 18 are installed, the lamp holders 20 are mounted to the long-side ends of the chassis 14, respectively (see FIG. 4). When the lamp holders 20 are mounted, the entire parts of the connectors 22 and the most parts of the end sections 18E of the cold cathode tubes 18 are housed in the main bodies of the lamp holders 20, respectively (see FIG. 6). The holddown sections 29 of the light source holddown members 25 are in contact with the cold cathode tubes 18 and the cold cathode tubes 18 are held down from the front side. With this configuration, the cold cathode tubes 18 are retained in the connectors 22 and less likely to come off from the connectors 22. Furthermore, the cold cathode tubes 18 are held at a constant distance from the bottom plate 14a of the chassis 14 (see FIGS. 6 and 7). Therefore, stable contact between the terminals 24 and the outer leads 18c are maintained and the leak currents flowing to the bottom plate 14a when the cold cathode tubes 18 are turned on can be stabilized. Each holddown section 29 and the corresponding cold cathode tube 18 are arranged such that the centers thereof with respect to the Y-axis direction are substantially aligned. Furthermore, the holddown section 29 closer to the front side and the outer lead 18c closer to the rear side are arranged parallel to each other along the Z-axis direction substantially in the same line. Therefore, the outer leads 18c are less likely to move from the positions at which the outer leads 18c are in contact with the light source contact portions 24a of the terminals 24 toward the front side and to come off from the connectors 22.

After the lamp holders 20 are mounted, the optical member 16 is attached so as to cover the opening 14b of the chassis 14. The outer edges of the optical member 16 are placed on the optical member holding portions 20b of the lamp holders 20. On the rear-surface side of the chassis 14, the connector connecting portions 21a of the inverter boards 21 are inserted in the board insertion holes 23c of the board receiving portions 23b of the connectors 22. As a result, terminals of the connector connecting portions 21a are brought into contact with the board contact portions 24b of the terminals 24 (FIG. 6). The inverter boards 21 are electrically connected to the cold cathode tubes 18 via the connectors 22. Then, the assembly of the backlight unit 12 is complete (see FIG. 3).

When the liquid crystal display device 10 including the backlight unit 12 assembled according to the above procedures is turned on, the cold cathode tubes 18 in the backlight unit 12 are turned on and image signals are input to the liquid crystal panel 11. As illustrated in FIG. 6, the output voltage of each inverter board 21 is applied to the corresponding electrodes 18b via the terminals 24 of the corresponding connector 22 and the outer leads 18 for turning on the cold cathode tubes 18. Electrons emitted from the electrodes 18b hit mercury atoms in the glass tubes 18a and ultraviolet rays are released from the mercury atoms. The ultraviolet rays are converted into visible light rays by fluorescent substances and the visible light rays are emitted from the glass tubes 18a to the outside. The light rays emitted from the cold cathode tubes 18 directly illuminate the optical member 16 or indirectly illuminate the optical member 16 after reflected by the reflection sheet 15 or the sloped portions 20b of the lamp holders 20. The illumination light passes through the optical member 16 and the light passing through the optical member 16 is converted into even planar light. Then, the light illuminates the liquid crystal panel and specified images are displayed on the display surface.

The electrode 18b of each cold cathode tube 18 heats up when the cold cathode tube 18 is turned on and a high voltage is applied thereto. As a result, the temperature at the end section 18E tends to be higher than the temperature at the middle section 18C. The amount of heat generated by the electrode 18b tends to increase when the gas pressure in the cold cathode tube 18 is decreased or the tube current is increased to increase the luminance. As a result, a difference in temperature between the end section 18E and the middle section 18C becomes more significant. As illustrated in FIGS. 6 and 9, each lamp holder 20 includes the light source holddown member 25 that holds down the middle section 18C, which is relatively low in temperature, for holding the cold cathode tube 18. In comparison to the configuration in which the end section 18E, which is relatively high in temperature, is directly held down by the main body 20a, the light source holddown member 25 is less likely to melt. If the light source holddown member 25 is melted, the light source holddown member 25 may not be able to properly hold down the cold cathode tube 18. However, the light source holddown member 25 of this embodiment is less likely to melt. Therefore, the cold cathode tube 18 is stably held over time. As illustrated in FIGS. 6 and 7, the main body 20a of each lamp holder 20 has the opening 26 such that the main body 20a opens toward the middle of the cold cathode tubes 18. Therefore, air flows between the inside and the outside of the main body 20a and flows inside the chassis 14. The heat generated by the end sections 18E of the cold cathode tubes 18 mostly housed in the main body 20a is less likely to stay in the main body 20a. Therefore, the temperature of the end portions 19E of the cold cathode tubes 18 is less likely to become excessively high.

As illustrated in FIGS. 6, 7 and 9, the distal end surface 29a of the holddown section 29 of each light source holddown member 25 is in contact with the surface of the cold cathode tube 18. When the light emitted from the cold cathode tube 18 and traveling toward the outside hits the distal end surface 29a, the light is immediately and easily returned to the inside of the cold cathode tube 18. The light returned to the inside of the cold cathode tube 18 may be absorbed by the mercury inside the cold cathode tube 18. If that occurs, light extraction efficiency may decrease. Each holddown section 29 of this embodiment has a tapered shape and the contact area thereof with the cold cathode tube 18 is smaller than the other areas thereof overlapping the cold cathode tube 18. In comparison to a configuration in which the contact area is the same as the area overlapping the cold cathode tube 18, a possibility that the light emitted from the cold cathode tube 18 is reflected by the distal end surface 19a of the holddown section 29 and returned to the inside of the cold cathode tube 18 is low. Namely, efficiency in extraction of light from the cold cathode tube 18, that is, the luminance can be increased.

The base section 28 of the light source holddown member 25 covers the following areas of the cold cathode tube 18 from the front side: the area of the end section 18E (or the electrode 18b) projecting from the main body 20a toward the middle and the area of the meddle section 18C closer to the end section 18E. Furthermore, the width of the base section 28 is larger than the width of the electrode 18b or the outer diameter of the cold cathode tube 18. Therefore, the substantially entire area of the end section 18E of the cold cathode tube 18 including the electrode 18b is less likely to be exposed to the front side. The end section 18E of the cold cathode tube 18 includes the electrode 18b and thus the end section 18E is low or unstable in luminance in comparison to the middle section 18C, that is, the end section 18E is non-stable-light-emitting portion. However, the substantially entire area of the end section 18E is covered by the base section 28 from the front side. Therefore, the end section 18E is less likely to be viewed from the front side and uneven brightness is less likely to occur. Furthermore, the base section 28 has the width larger than the width of the holddown section 29 and projects closer to the middle of the cold cathode tube 18 than the holddown section 29. With this configuration, the holddown section 29 is less likely to be exposed to the front side. Therefore, the holddown section 29 is less likely to be viewed from the outside on the front side and the uneven brightness is further less likely to occur. The outer surface 28b of the base section 28 facing toward the front side is formed along the outline of the cold cathode tube 18. With the reflection light off the outer surface 28b, the base section 28 functions as a pseudo light source and thus the uneven brightness is further less likely to occur.

As described above, the backlight unit 12 includes the cold cathode tubes 18 and the lamp holders 20. Each cold cathode tube 18 includes the electrode 18b at the end section 18E. Each lamp holder 20 is a cover that covers the end sections 18E of the cold cathode tubes 18. The lamp holder 20 includes the light source holddown members 25 projecting toward the middle of the cold cathode tubes 18 and holding down the portion of the cold cathode tube 18 located closer to the middle than the electrodes 18b.

With the above configuration, the cold cathode tubes 18 are held down by the light source holddown members 25 of the lamp holders 20 and retained. Each cold cathode tube 18 includes the electrodes 18b in the end sections 18E. Each electrode 18b generates heat when a voltage is applied thereto and thus the end section 18E tends to be high in temperature than the middle section 18C. This tendency is more noticeable when the luminance is increased. Each light source holddown member 25 of each lamp holder 20 of this embodiment is formed so as to project toward the middle of the cold cathode tube 18 and configured to hold down the area of the middle section 18C of the cold cathode tube 18 closer to the middle than the electrodes 18b. The middle section 18C is lower in temperature than the end sections 18E in which the electrodes 18b are arranged. Therefore, the light source holddown members 25 holding down the cold cathode tubes 18 are less likely to melt and able to properly hold the cold cathode tubes 18. With the configuration of this embodiment, the light source holding function is properly provided.

Each light source holding portion 25 includes the base section 28 and the holddown section 29. The base section 28 projects from the lamp holder 20 toward the middle of the cold cathode tube 18 and covers a part of the middle section 18C of the cold cathode tube 18. The holddown section 29 projects from the base section 28 toward the cold cathode tube 18 and is in contact with the middle section 18C of the cold cathode tube 18. The holddown section 29 projecting from the base section 28 that covers a part of the middle section 18C of the cold cathode tube 18 is in contact with the middle section 18C of the cold cathode tube 18. With this configuration, the cold cathode tube 18 is properly retained.

The contact area of each holddown section 29 with the cold cathode tube 18 at the distal end is smaller than the area of the other section overlapping the cold cathode tube 18. In comparison to the configuration in which the contact area of the distal end of the holddown section with the cold cathode tube 18 is the same as the area of the other section overlapping the cold cathode tube 18, the possibility that the light emitted from the cold cathode tube 18 is reflected by the distal end of the holddown section 29 and immediately returned to the inside of the cold cathode tube 18 can be reduced. The light returned to the inside of the cold cathode tube 18 may be absorbed by the cold cathode tube 18 itself. According to this embodiment, the amount of light returned to the inside of the cold cathode tube 18 is small, as describe above. As a result, the light extraction efficiency can be increased and the luminance increases.

Each holddown section 29 has the tapered shape. In comparison to a configuration in which the holddown section is formed in a stepped shape such that the contact area of the distal end is smaller than the area of other section overlapping the cold cathode tube 18, the light emitted from the cold cathode tube 18 is less likely to be blocked by the holddown section 29. Therefore, the emitted light use efficiency improves.

Each holddown section 29 has the distal end that is not pointy. The distal end of the holddown section 29 that is not pointy is in contact with the cold cathode tube 18. In comparison to a pointy distal end, the distal end that is not pointy can stably hold down the cold cathode tube 18.

Each holddown section 29 has the four-sided pyramid-like shape. With the holddown section 29 having the four-sided pyramid-like shape, the cold cathode tube 18 is properly held down.

Each holddown section has the maximum dimension measuring in the direction (the Y-axis direction) perpendicular to the direction in which the base section 28 projects from the holder 20 (the X-axis direction) and the direction in which the holddown section 29 projects from the base section 28 (the Z-axis direction) is smaller than that of the cold cathode tube 18. In comparison to a configuration in which the dimension of the holddown section is the same as that of the cold cathode tube 18, the holddown section 29 is less likely to be an obstacle of the light emitted from the cold cathode tube 18.

Each electrode 18b is arranged such that at least a part thereof is closer to the middle of the cold cathode tube 18 than the holder 20. Each base section 28 is arranged so as to overlap the electrode 18B. Although the at least part of the electrode 18b is arranged outside the lamp holder, the base section 28 is arranged so as to overlap the electrode 18b. Therefore, the electrode 18b is less likely to be exposed to the light emitting side of the backlight unit 12 and thus the uneven brightness is less likely to occur.

The dimension of each base section 28 measuring in the direction perpendicular to the direction in which the base section 28 projects from the lamp holder 20 and the direction in which the holddown section 29 projects is larger than the electrode 18b. With this configuration, the electrode 18b is further less likely to be exposed.

The dimension of each base section 28 measuring in the direction perpendicular to the direction in which the base section 28 projects from the lamp holder 20 and the direction in which the holddown section 29 projects from the base section 28 is larger than that of the cold cathode tube 18. With this configuration, the electrode 18b is further less likely to be exposed.

The dimension of each base section 28 measuring in the direction perpendicular to the direction in which the base section 28 projects from the lamp holder 20 and the direction in which the holddown section 29 projects from the base section 28 is larger than the holddown section 29. The holddown section 29 is covered by the base section 28. Therefore, the holddown section 29 is less likely to be exposed to the light emitting side of the back light unit 12 and thus the uneven brightness is less likely to occur.

Each base section 28 has the umbrella-like shape so as to cover the holddown section 29. The holddown section 29 is covered by the base section 28 having the umbrella-like shape. Therefore, the holddown section 29 is less likely to be exposed. In comparison to a configuration in which the base section has a flat plate-like shape, the base section 28 has higher rigidity and deformation such as warp is less likely to occur. Therefore, the holddown section 29 in contact with the cold cathode tube 18 is less likely to move and thus the holddown section 29 stably holds the cold cathode tube 18.

The outer surface 28b of each base section 28 on the side opposite from the cold cathode tube 18 is formed along the outline of the cold cathode tube 18. When the light is reflected by the outer surface 28b of the base section 28 on the side opposite from the cold cathode tube 18, the reflected light has the same directivity as the emitted light from the cold cathode tube 18. The base section 28 functions as a pseudo light source. This configuration is preferable for reducing the uneven brightness.

The inner surface 28a of each base section 28 on the cold cathode tube 18 side is formed along the outline of the cold cathode tube 18. With this configuration, the base section 28 has a substantially constant thickness and thus has sufficient rigidity. As a result, the cold cathode tube 18 is further stably retained.

Each base section 28 projects closer to the middle of the cold cathode tube 18 than the holddown section 29. With the base section 28, the holddown section 29 is less likely to be exposed to the light emitting side of the backlight unit 12 and the uneven brightness is less likely to occur.

The surface of each lamp holder 20 facing toward the middle of the cold cathode tube 18 has the openings 26 in the area at least off the cold cathode tubes 18 with respect to the direction perpendicular to the direction in which the light source holddown member 25 projects from the lamp holder 20 and the direction in which the light source holddown member 25 and the cold cathode tube 18 are arranged. Through the openings 26, air flows between the inside and the outside of the lamp holder 20. Therefore, heat generated by the electrodes 18b in the end sections 18E of the cold cathode tubes 18 can be efficiently released.

The cold cathode tubes 18 are arranged parallel to one another along the direction perpendicular to the direction in which the light source holddown members 25 project from the lamp holders 20 and the direction in which the light source holddown members 25 and the cold cathode tubes 18 are arranged. Each opening 26 is formed in the area extending over the adjacent cold cathode tubes 18. Through the opening 26 in the area extending over the adjacent cold cathode tubes 18, airflow between the inside and the outside of the lamp holder 20 is accelerated. Namely, the lamp holders 20 exert high heat dissipation performance.

The Y dimension of an area in which the openings 26 are formed is the same as that of an area in which the cold cathode tubes 18 are arranged. The Y dimension measures in a direction (the Y-axis direction) perpendicular to a direction in which the light source holddown members 25 project from each lamp holder 20 (the X-axis direction) and a direction in which the light source holddown members 25 and the cold cathode tubes 18 are arranged (the Z-axis direction). Clearances are provided between opening edges of the openings 26 and the cold cathode tubes 18 with respect to the arrangement direction of the light source holddown members 25 and the cold cathode tubes 18. With this configuration, heat generated by the electrodes 18b in the end sections 18E of the cold cathode tubes 18 is efficiently released through the clearances. Even though the clearances are provided between the cold cathode tubes 18 and the opening edges of the openings 26, the cold cathode tubes 18 are properly held down by the light source holding members 25.

At the end section 18E of each cold cathode tube 18, the outer lead 18c connected to the electrode 18b and projecting to the outside is provided. Moreover, the connector 22 connected to the outer lead 18c is provided. With the light source holddown members 25 holding down the cold cathode tubes 18, the outer leads 18c are stably connected to the connectors 22. With this configuration, the cold cathode tubes 18 stably emit light.

Each connector 22 has the terminal 24 in contact with the outer lead 18c. The direction (the Z-axis direction) in which the outer lead 18c is inserted into or removed from the terminal 24 is substantially aligned with the direction (the Z-axis direction) in which the light source holddown member 25 and the cold cathode tube 18 are arranged. With the cold cathode tube 28 held down by the light source holddown member 25, the outer lead 18c in contact with the terminal 24 is less likely to come off along the insertion and removal direction.

The chassis 14 housing the cold cathode tubes 18 and the lamp holders 20 is provided. The cold cathode tubes 18 are linear light sources. A plurality of the cold cathode tubes 18 are arranged parallel to one another inside the chassis 14. A plurality of the light source holddown members 25 are mounted on the end portions of the chassis 14. Furthermore, a plurality of the light source holddown members 25 are arranged on each lamp holder 20 according to the arrangement of the cold cathode tubes 18. By arranging the light source holddown members 25 parallel to one another according to the cold cathode tubes 18, the light source holddown members 25 properly hold down the cold cathode tubes 18 and the cold cathode tubes 18 are properly retained.

The chassis 14 has the opening 14b through which the light exits. The optical member 16 is arranged so as to face the cold cathode tubes 18 and to cover the opening 14b. Each lamp holder 20 includes the optical member holding portion 20b on which the optical member 16 is placed. With this configuration, the optical member 16 is supported by the optical member holding portions 20b of the lamp holders 20 and thus the optical member 16 is held a substantially constant distance away from the cold cathode tubes 18.

The lamp holders 20 have light reflectivities. Light is efficiently reflected by the surfaces of the lamp holders. With this configuration, the light use efficiency improves.

The chassis 14 housing the cold cathode tubes 18 and the lamp holders 20 is provided. Each lamp holder 20 includes the sloped portion 20c projecting toward the middle of the cold cathode tubes 18 and sloped toward the bottom surface of the chassis 14. With this configuration, the light is efficiently reflected by the sloped portion 20c and directed to the light exit side.

The first embodiment according to the present invention has been described. The present invention is not limited to the embodiment explained above. The following modifications may be included in the technical scope of the present invention, for example. In the following modifications, the same parts as the above embodiment will be indicated by the same symbols and may not be illustrated or explained.

### <First Modification of First Embodiment>

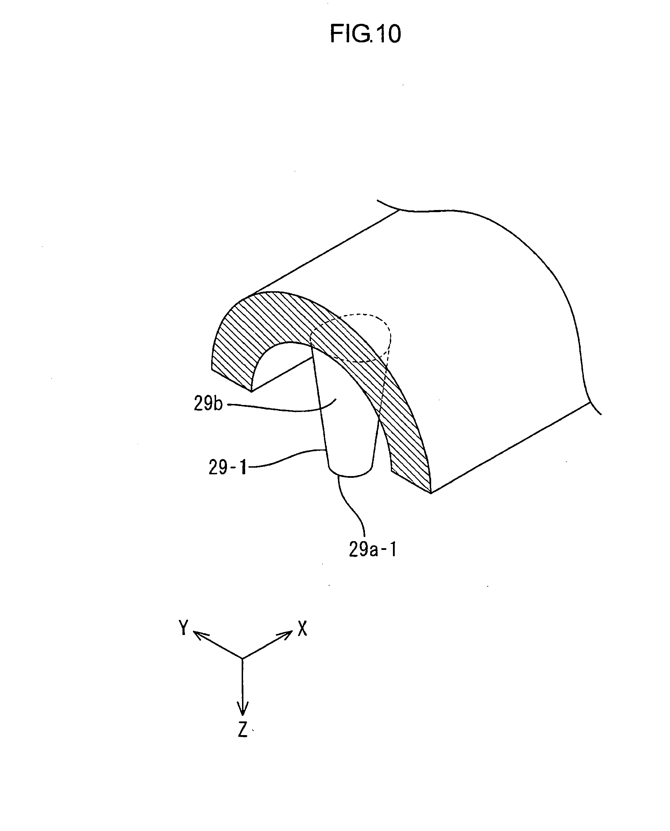

A first modification of the first embodiment will be explained with reference to FIG. 10. Holddown portions 29-1 having a different shape from the first embodiment will be explained.

As illustrated in FIG. 10, each holddown section 29-1 has a cone-like shape tapering toward the tip. The tip of the holddown section 29-1 is cut off. A distal end surface 29a-1 is a substantially flat surface having a specified area. Namely, the distal end of the holddown section 29-1 is not pointy and the holddown section 29-1 has a truncated cone-like shape. A periphery 29b of the holddown section 29-1 other than the distal end surface 29a-1 has a round cross section. When light his the periphery, the light is reflected radially, that is, non-directionally.

In this modification, each holddown section 29-1 has the cone-like shape. Therefore, the light reflected off the periphery of the holddown section 29-1 having the cone-like shape travels radially, that is, the reflected light is less likely to be directional. This is preferable for reducing the uneven brightness.

### <Second Modification of First Embodiment>

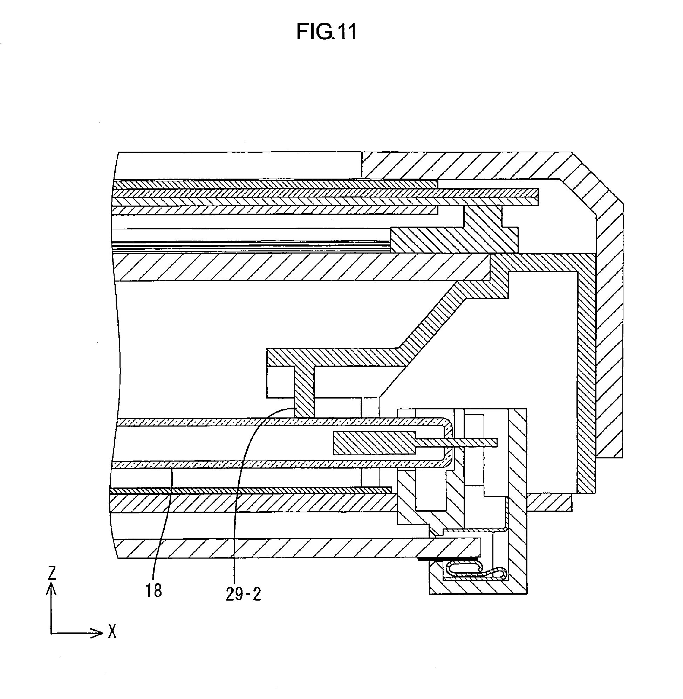

A second modification of the first embodiment will be explained with reference to FIG. 11. Holddown sections 29-2 having a different shape from the first embodiment will be explained.

As illustrated in FIG. 11, each holddown section 29-2 has a constant X dimension for an entire length thereof. Specifically, the holddown section 29-2 has a tapered-shape gradually decreasing in Y dimension from the base end to the distal end (see FIG. 7). However, the X dimension is constant without variation from the base end toward the distal end. The holddown sections 29-2 having such a shape can also properly hold down the cold cathode tubes 18.

### <Third Modification of First Embodiment>

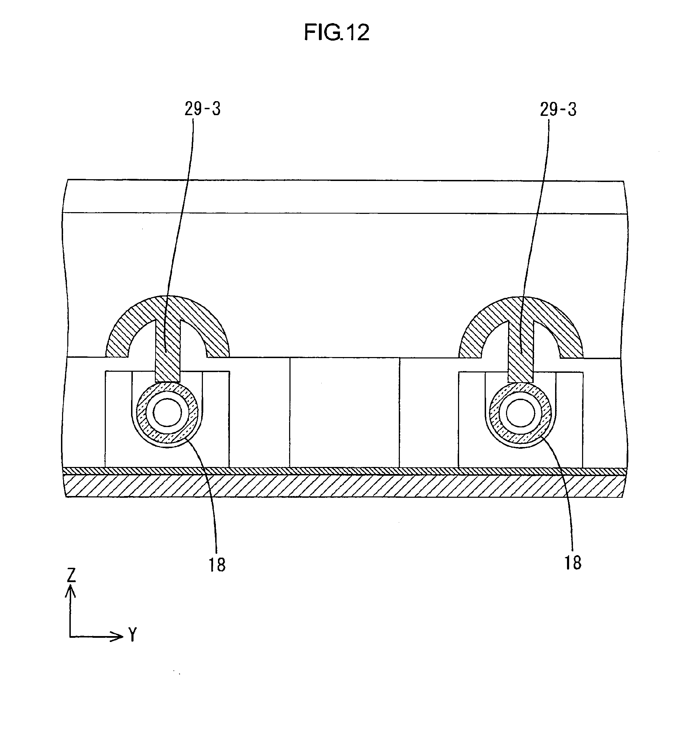

A third modification of the first embodiment will be explained with reference to FIG. 12. Holddown sections 29-3 having a different shape from the first embodiment will be explained.

As illustrated in FIG. 12, each holddown section 29-3 has a constant Y dimension for an entire length thereof. Specifically, the holddown section 29-3 has a tapered shape gradually decreasing in X dimension from the base end toward the distal end (see FIG. 6). However, the Y dimension is constant without variation from the base end to the distal end. The holddown sections 29-3. having such a shape can also properly hold down the cold cathode tubes 18.

### <Second Embodiment>

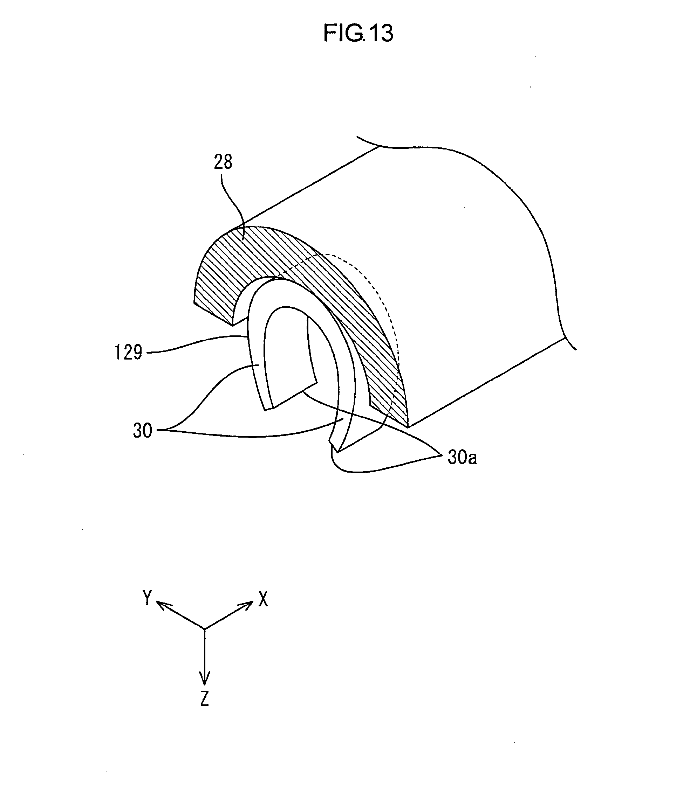

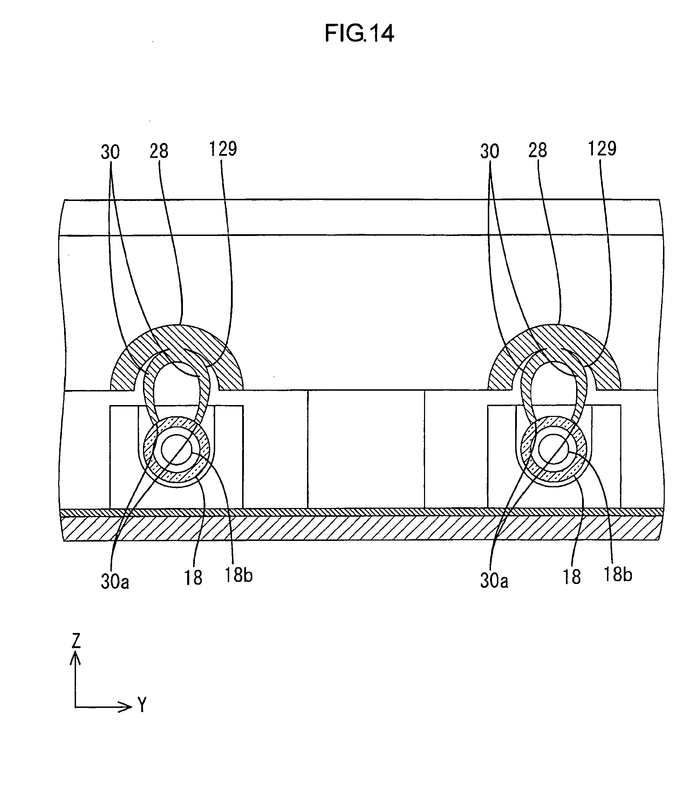

The second embodiment of the present invention will be explained with reference to FIGS. 13 and 14. In this embodiment, holddown portions 129 having different configurations are used. Similar configurations, operations, and effects to those of the first embodiment will not be explained.

As illustrated in FIGS. 13 and 14, each holddown section 129 has a fork-like overall shape. Specifically, the holddown section 129 has a symmetric horseshoe-like overall shape. The holddown section 129 includes a pair of legs 30 projecting from the base section 28 toward the rear side. Each leg 30 has a curved shape curving outward from the base end to the distal end. The distal ends of the legs 30 are separated from each other in the Y-axis direction, that is, the direction perpendicular to the axial direction of the cold cathode tube 18. The distance between the distal ends is smaller than the outer diameter of the cold cathode tube 18. The X dimension of each leg 30 is substantially constant for an entire periphery but the Y dimension is gradually decreased from the base end toward the distal end. Namely, the leg 30 has a tapered shape. A distal end surface 20a of the leg 30 is smaller than other areas overlapping the cold cathode tube 18, specifically, the smallest. The distal end surfaces 30a of the legs 30 are in contact with the periphery of the cold cathode tube 18 and the cold cathode tube 18 is held down from the front side. The distal ends of the legs 30 holds down the cold cathode tube 18 at positions away from each other in the Y-axis direction. Therefore, the cold cathode tube 18 is stably held down, that is, a light source holding function is exerted at a high level. Furthermore, distances between the electrode 18b and the distal ends of the respective legs 30 are substantially equal and thus thermal effects of the electrode 18b to the distal ends of the legs 30 are substantially equal. Therefore, the cold cathode tube 18 is stably retained.

In this embodiment, each holddown section 129 has the fork-like shape and a pair of the legs 30. The legs 30 are in contact with the corresponding cold cathode tube 18. With this configuration, the cold cathode tube 18 is stably held down at two separate positions by legs 30 of the holddown section 129 formed in the fork-like shape. The cold cathode tube 18 holding function can be improved.

Each of the legs 30 in a pair has the tapered shape. With this configuration, the light emitted from the cold cathode tube 18 is less likely to be blocked by the legs 30 and the efficiency in using emitted light can be improved.

The legs 30 in a pair are in contact with the cold cathode tube 18 at the two positions away from each other in the direction (the Y-axis direction) perpendicular to the direction in which the base section 28 projects from the lamp holder 20 (the X-axis direction) and the direction in which the holddown section 129 projects from the base section 28 (the Z-axis direction). With this configuration, the distances between the electrode 18b and the legs 30 are substantially constant. Therefore, the thermal effects of the electrode 18b to the legs 30 are substantially equal.

### <Third Embodiment>

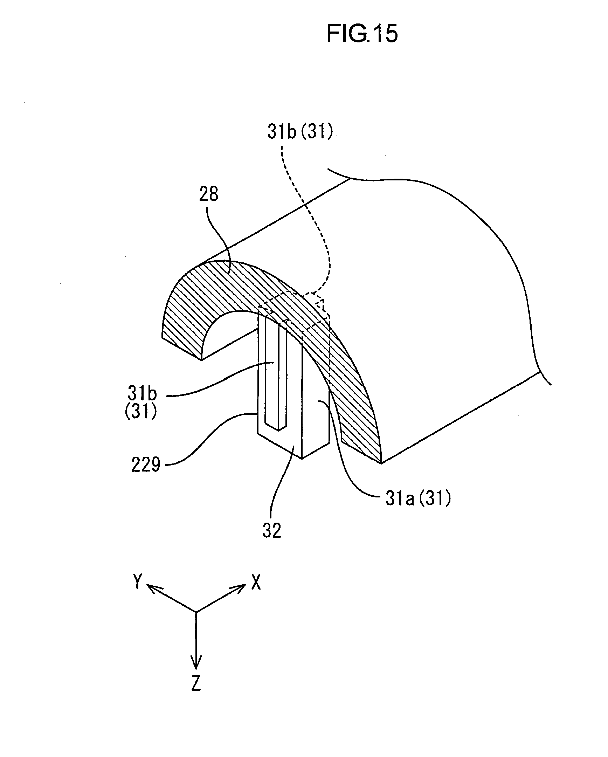

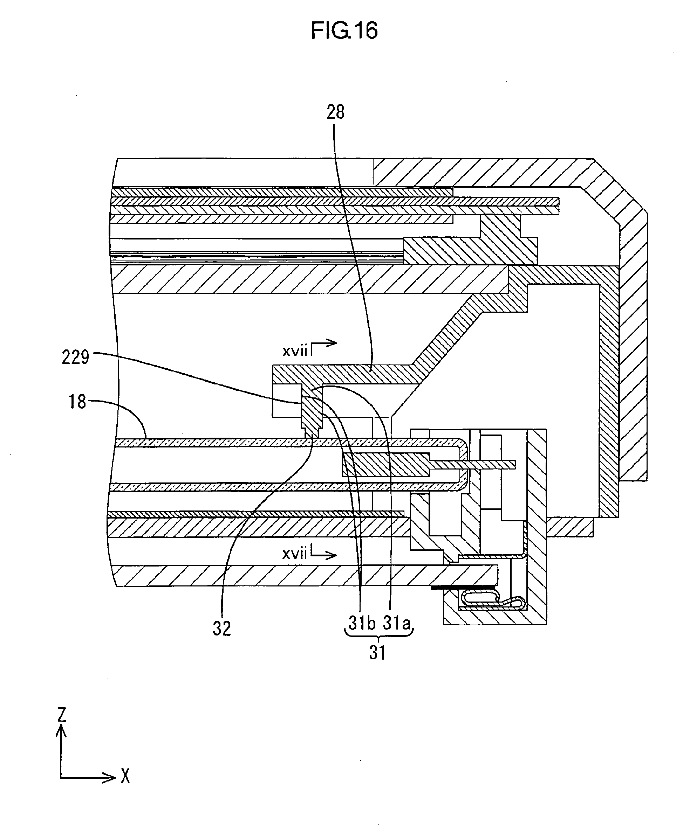

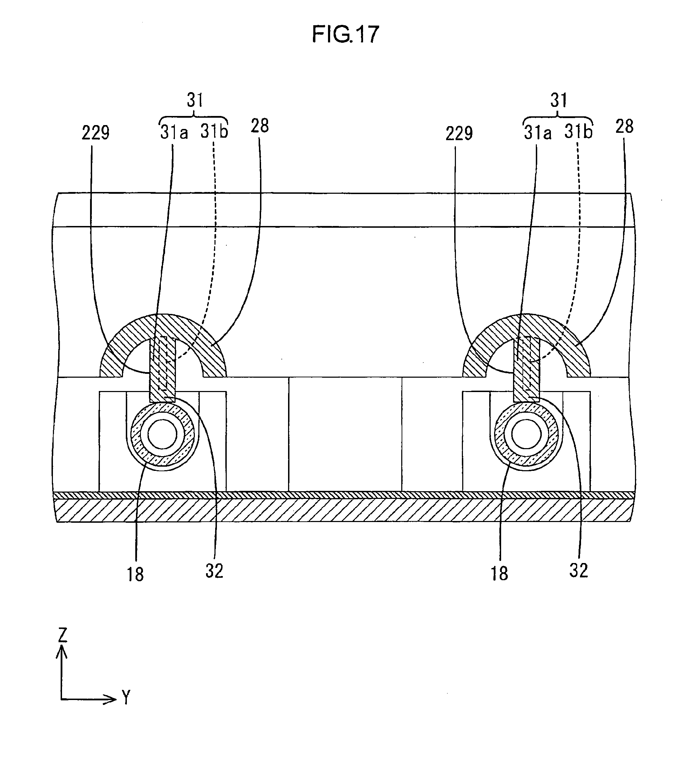

The third embodiment of the present invention will be explained with reference to FIGS. 15 to 17. In this embodiment, holddown sections 229 having different configurations are used. Similar configurations, operations, and effects to those of the first embodiment will not be explained.

As illustrated in FIGS. 15 to 17, each holddown section 229 includes a column 31 and a protrusion 32. The column 31 projects from the base section 28 and has a substantially constant thickness. The protrusion 32 is provided at the distal end of the column 31. The column 31 includes a main column part 31a having a rectangular cross section and ribs 31b formed on side surfaces of the main column part 31a. The overall cross section of the holddown section 229 is a cross-like shape. The column 31 having the rectangular cross section is arranged with the long sides and the short sides aligned with the Y-axis direction and the X-axis direction, respectively. The protrusion 32 has a rectangular cross section extending along a depth (or the long side) of the cross section of the column 31. The shape of the cross section is the same as that of the cross section of the main column part 31a. Namely, the protrusion 32 extends from the column 31 as is the main column part 31a is extended. A contact area of the protrusion 32, which is the distal end, with the cold cathode tube 18 is smaller than other area of the holddown section 229, which is the column 31, overlapping the cold cathode tube 18. Therefore, the efficiency in extraction of light from the cold cathode tube 18 can be improved, similar to the first embodiment.

In this embodiment, as explained above, each holddown section 229 includes the column 31 and the protrusion 32. The column 31 projects from the base section 28 and has the substantially constant thickness. The protrusion 32 is formed on the distal end of the column. Because each holddown section 229 includes the column 31 having the substantially constant thickness, size control required in production is simplified and thus a production cost can be reduced.

Each column 31 has the cross-like cross section and the protrusion 32 has the rectangular cross section along the depth of the cross section of the column. Because the column 31 has the cross-like cross section, the holddown section 229 has sufficient strength. Moreover, because the protrusion 32 has the rectangular shape along the depth of the cross section of the column 31, the holddown section 229 is provided in a simple shape. Therefore, the production cost can be further reduced.

### <Fourth Embodiment>

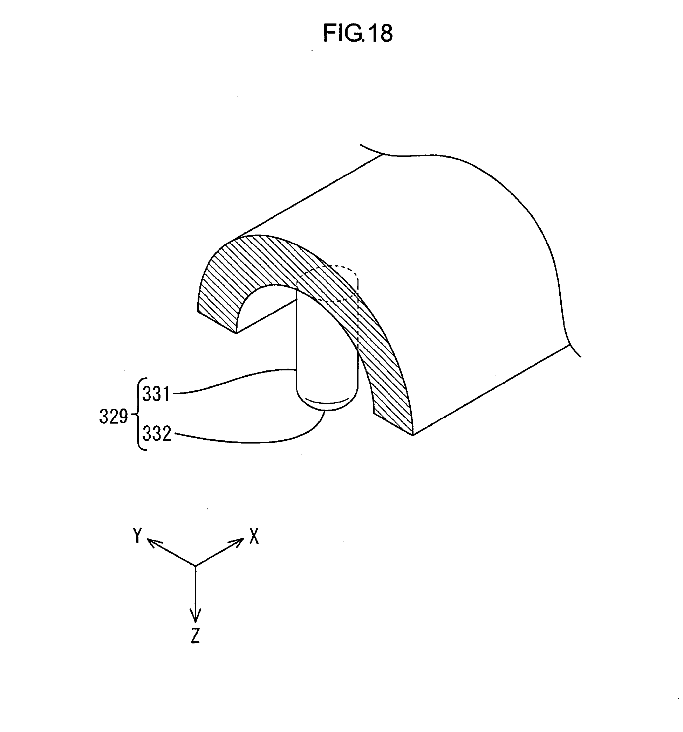

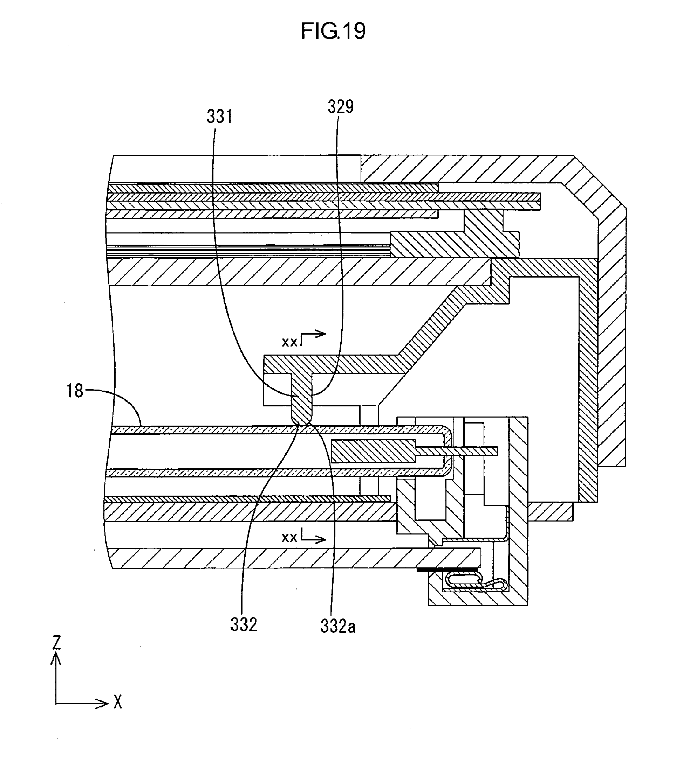

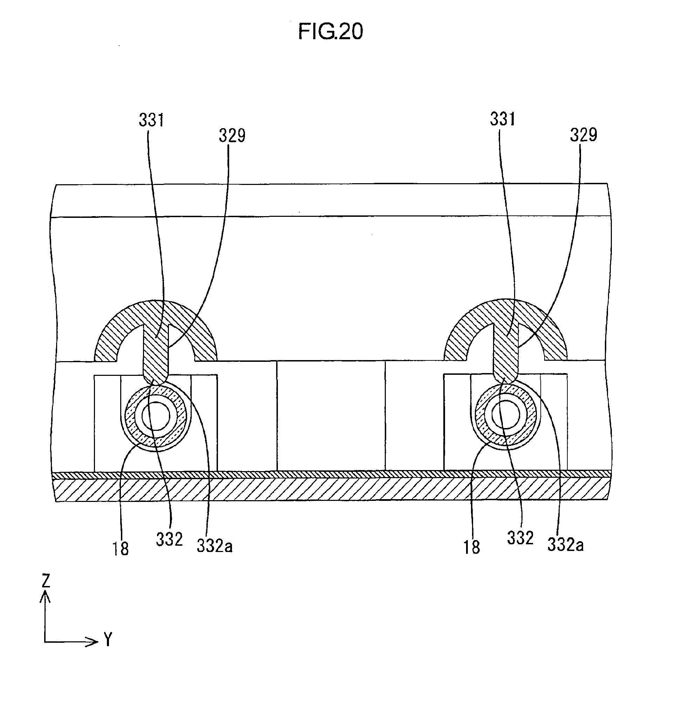

The fourth embodiment of the present invention will be explained with reference to FIGS. 18 to 20. In this embodiment, holddown portions 329 having different configurations are used. Similar configurations, operations, and effects similar to the first embodiment will not be explained.

As illustrated in FIGS. 18 to 20, a column 331 of each holddown section 329 has a round column-like shape having a substantially constant thickness for an entire length. A protrusion 331 projecting from the distal end of the column 331 is a round portion formed in a semispherical shape. The column 331 has a round cross section with a diameter substantially equal to the diameter of the protrusion 332 in the semispherical shape. The outer surface of the protrusion 332 is a round surface 332a and thus the outer surface is in point contact with the cold cathode tube 18. This can make a contact area of the holddown section 329 with the cold cathode tube 18 as small as possible. Therefore, the light extraction efficiency can be further improved.

In this embodiment, as explained above, each protrusion 332 includes the round portion having the round surface 332a as the outer surface. The outer surface of the protrusion 332, which is the round portion, is in point contact with the cold cathode tube 18. This can make the contact area of the holddown section 329 with the cold cathode tube 18 as small as possible. Therefore, the light extraction efficiency can be further improved.

Each column 331 has the round cross section with the diameter substantially equal to the diameter of the protrusion, which is the round portion. The distal end surface of the column 331 continues into the protrusion 332, a substantially entire part thereof is round. Namely, the distal end surface is not exposed. Therefore, light is less likely to be blocked by the distal end surface of the column 331.

### <Fifth Embodiment>

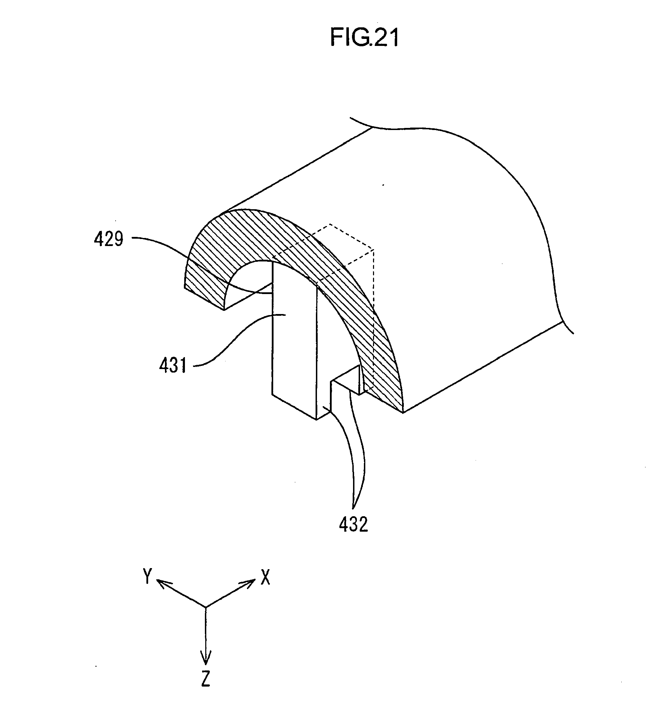

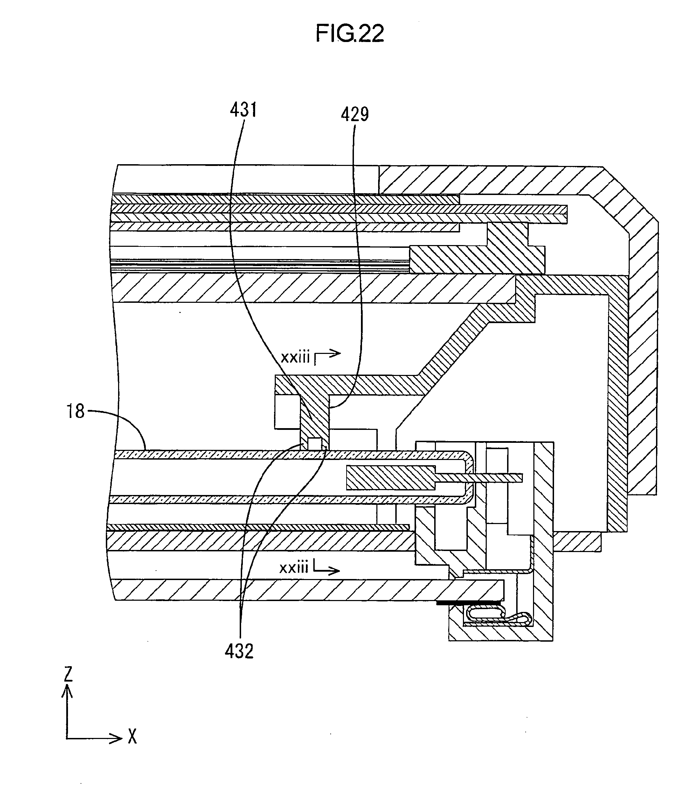

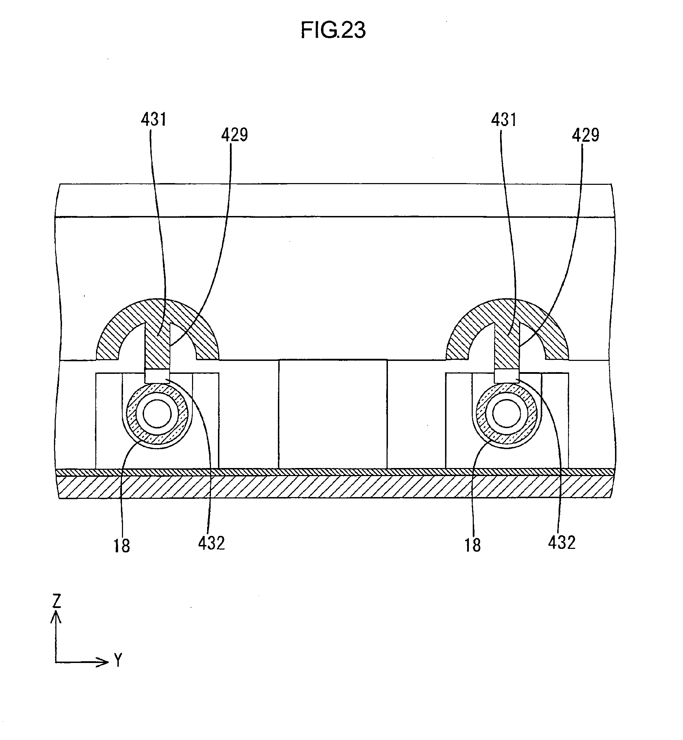

The fifth embodiment of the present invention will be explained with reference to FIGS. 21 to 23. In this embodiment, holddown portions 429 having different configurations are used. Similar configurations, operations, and effects to the first embodiment will not be explained.

As illustrated in FIGS. 21 to 23, a column 431 of each holddown section 429 is formed in a rectangular column-like shape with a substantially constant thickness for an entire length. Protrusions 432 projecting from the distal end of the column 331 are formed in a block-like shape and provided in a pair. The column 431 has a rectangular cross section. The column 431 is arranged with the long sides and the short sides aligned with the X-axis direction and the Y-axis direction, respectively. The protrusions 432 are provided in a pair and arranged at the respective edge portions on the distal end surface of the column 431 at the ends of the long side (along the X-axis direction). The protrusions 432 are arranged a specified distance away from each other. A specified space is provided between the distal end surface of the column 431 and the cold cathode tube 18 in an area between the projections 432. Therefore, light can be emitted from the cold cathode tube 18 to the space. The protrusions 432 are in contact with the cold cathode tube 18 at two different points with respect to the axial direction of the cold cathode tube 18 (the X-axis direction). Therefore, the cold cathode tube 18 is stablly held down.

In this embodiment, as explained above, the protrusions 432 are provided in a pair and arranged on the distal end of the column 431 the specified distance away from each other. With this configuration, the cold cathode tube 18 is further stably held down by the protrusions 432 provided in a pair and arranged the specified distance away form each other on the distal end of the column 431. Therefore, the function of retaining the cold cathode tubes 18 can be improved.

### <Other Embodiments>

The embodiments according to the present invention have been described. The present invention is not limited to the embodiments explained in the above description with reference to the drawings. The following embodiments may be included in the technical scope of the present invention, for example.
(1) In the above embodiments, the base section of each light source holddown section has the constant thickness for the entire width. However, the thickness of the base section may be varied in portions. For example, the outer surface of the base section may be formed in an arch-like shape along the outline of the cold cathode tube and the inner surface may be formed in a flat shape along the X-Y plane. The outer surface and the inner surface may be formed in arch-like shapes with different curvatures.

(2) In the above embodiments, the base section of each light source holddown member has the curved shape with the arch-like cross section. However, the base section may be formed such that the cross section is a flat plate-like shape.

(3) In the above embodiments, the base portion of each light source holddown member projects closer to the middle of the cold cathode tube than the holddown section. However, the distal end of the base section may be set at substantially the same position as the surface of the holddown section facing the middle of the cold cathode tube.

(4) In the above embodiments, the width of the base section of each light source holddown member is larger than that of the electrode or the cold cathode tube. However, the width of the base section may be substantially equal to that of the cold cathode tube or the electrode, or larger than that of the electrode but smaller that of the cold cathode tube. Furthermore, the width of the base section may be smaller than that of the electrode and the cold cathode tube.

(5) In the above embodiments, the width of the base section of each light source is larger than that of the holddown section. However, the width of the base section may be substantially equal to that of the holddown section.

(6) In the above embodiments, the holddown section of each light source holddown member is in contact with the cold cathode tube the specified distance away from the electrode. However, the holddown section may be in contact with the cold cathode tube at a point farther away from the electrode or at an adjacent point close to the electrode. Furthermore, the contact point of the holddown section with respect to the circumferential direction of the cold cathode tube can be varied as appropriate.

(7) In the first embodiment, the holddown section of each light source holddown member has the four-sided pyramid-like shape. However, the holddown section may be formed in other types of pyramid-like shapes (such as a triangular pyramid-like shape and a five-sided pyramid-like shape).

(8) In the first modification of the first embodiment, the holddown section of each light source holddown member has the cone-like shape. However, the holddown section may be formed in a cone-like shape with an oval cross section.

(9) In the first, the second and the fifth embodiments, the distal end surface of the holddown section of each light source holddown member is the substantially flat surface. However, the distal end surface of the holddown section may be formed along the periphery of the cold cathode tube and in surface contact with the cold cathode tube. With this configuration, the cold cathode tube is further stably held down by the holddown section and thus the light source retaining function can be exerted at a high level.

(10) In the second embodiment, each leg of each holddown section has the tapered shape tapered with respect to the Y-axis direction. However, the leg may be tapered with respect to the X-axis direction. Furthermore, the leg may be formed in a four-sided pyramid-like shape or a cone-like shape similar to the first embodiment.

(11) In the second embodiment, the legs of each holddown section are in contact with the cold cathode tube at the different points with respect to the Y-axis direction. However, the legs may be in contact with the cold cathode tube at different points with respect to the X-axis direction similar to the fifth embodiment.

(12) In the second embodiment, each leg of the holddown section has the tapered shape. However, the leg may be formed in a shape with a constant with for the entire length.

(13) In the second embodiment, each holddown section has the fork-like shape. However, the holddown section may have a tripod-like shape, that is, three legs. Furthermore, the holddown section may have four or more legs.

(14) In the first and the second embodiments, each holddown section has the tapered shape with the tip thereof cut off, that is, the holddown section in not pointy. However, the holddown section may be formed in a pointy shape.

(15) In the third embodiment, each main column part has the column-like shape and the rectangular cross section. However, the main column part may have a square cross section or a round cross section, that is, the shape of the main column part can be altered as appropriate. The shape of each protrusion may be altered into the same shape as the main column part according to the alteration of the main column part. The shape of the ribs on the main column part may be altered as appropriate.

(16) In the fourth embodiment, each column has the round cross section. However, the column may have an oval cross section. The protrusion (the round portion) having the semispherical shape may be formed in an oval spherical shape.

(17) In the fifth embodiment, each column has the rectangular cross section. However, the column may have a square or a round cross section, that is, the shape of the column may be altered as appropriate. The shape of each of the protrusions in a pair may be altered as appropriate.

(18) In the fifth embodiment, the protrusions of each holddown section are in contact with the cold cathode tube at the separated points with respect to the X-axis direction. However, the protrusions may be in contact with the cold cathode tube at separated points with respect to the Y-axis direction similar to the second embodiment.

(19) In the above embodiments, each opening of the main body of each lamp holder is formed in an area extending over two cathode tubes. However, the opening may be formed in an area extending over three or more cold cathode tubes. Moreover, the opening may be formed in an area that does not extend over the adjacent cold cathode tubes but in are area corresponding the corresponding cold cathode tube. Furthermore, the shape or the size of each opening can be altered as appropriate.

(20) In the above embodiments, the linear cold cathode tubes are used. However, U-shaped cold cathode tubes or W-shaped cold cathode tubes may be used.

(21) In the above embodiments, the internal electrode-type cold cathode tubes including the electrodes inside the glass tubes are used. However, external electrode-type cold cathode tubes including electrodes attached to ends of glass tubes may be used.

(22) In the above embodiments, the ends of the cold cathode tubes are fitted into the connectors. However, the cold cathode tubes may be electrically connected to the inverter boards with wires by soldering ends of the wires to the outer leads of the cold cathode tubes.

(23) In the above embodiments, the cold cathode tubes are used as light sources (linear light sources). However, hot cathode tubes may be used. Furthermore, other types of fluorescent tubes or discharge tubes (e.g., mercury lamps) may be used.

(24) In the above embodiments, the liquid crystal panel and the chassis are arranged in vertical positions with the short sides thereof aligned with the vertical direction. However, the liquid crystal panel and the chassis may be arranged in vertical positions with the long side thereof aligned with the vertical direction.

(25) In the above embodiments, the TFTs are used as switching components of the liquid crystal display device. However, the technology described herein can be applied to liquid crystal display devices using switching components other than TFTs (e.g., thin film diodes (TFDs)). Furthermore, it can be applied to black-and-white liquid crystal display devices other than the color liquid crystal display device.

(26) In the above embodiments, the liquid crystal display device including the liquid crystal panel as a display panel is used. However, the present invention can be applied to display devices including other types of display panels.

(27) In the above embodiments, the television receiver including the tuner is used. However, the technology can be applied to a display device without the tuner.

### EXPLANATION OF SYMBOLS

10: Liquid crystal display device (Display device), 11: Liquid crystal panel (Display panel), 12: Backlight unit (Lighting device), 14: Chassis, 14b: Opening, 18: Cold cathode tube (Light source, linear light source), 18b: Electrode, 18c: Outer lead, 18C: End section, 18E: Middle section, 20: Lamp holder (Cover), 20b: Optical member holding portion, 20c: Sloped portion, 22: Connector, 24: Terminal, 25: Light source holddown member, 26: Opening, 28: Base section, 28a: Inner surface (Light source-side surface), 28b: Outer surface (Surface opposite from the light source side), 29, 129, 229, 329, 429: Holddown section, 30: Leg, 31, 331, 431: Column, 32, 332: Protrusion, 332: Protrusion (Round portion), 332a: Round surface, TV: Television receiver

## Claims

1. A lighting device comprising:
a light source having an electrode at an end;
a cover covering the end of the light source; and
a light source holddown member arranged on the cover so as to project toward a middle of the light source and holding down the light source at a point closer to the middle of the light source than the electrode.

2. The lighting device according to claim 1, wherein the light source holddown member includes a base section and a holddown section, the base section projecting from the cover toward the middle of the light source and covering a part of the middle section of the light source, the holddown section projecting from the base section toward a light source side and being in contact with the middle section of the light source.

3. The lighting device according to claim 2, wherein the holddown section has a distal end with a contact area with the light source smaller than an area of another part thereof overlapping the light source.

4. The lighting device according to claim 3, wherein the holddown section has a tapered shape.

5. The lighting device according to according to claim 4, wherein the distal end of the holddown section is not pointy.

6. The lighting device according to any one of claims 4 and 5, wherein the holddown section has a four-sided pyramid-like shape.

7. The lighting device according to any one of claims 4 and 5, wherein the holddown section has a cone-like.

8. The lighting device according to claim 3, wherein the holddown section includes a column and a protrusion, the column projecting from the base section and having a substantially constant thickness, the protrusion being formed on a distal end of the column.

9. The lighting device according to claim 8, wherein
the column has a cross-like cross section, and
the protrusion has a rectangular cross section along any one of a long side and a short side of the cross section of the column.

10. The lighting device according to claim 8, wherein the protrusion is a round portion with a round outer surface.

11. The lighting device according to claim 10, wherein the column has a round cross section with a diameter substantially equal to a diameter of the round portion.

12. The lighting device according to claim 8, wherein the protrusion includes a pair of protrusions arranged away from each other at the distal end of the column.

13. The lighting device according to claim 3, wherein the holddown section has a fork-like shape and a pair of legs in contact with the light source.

14. The lighting device according to claim 13, wherein each of the legs has a tapered shape.

15. The lighting device according to any one of claims 13 and 14, wherein the legs are in contact with the cold cathode tube at points away from each other in a direction perpendicular to a direction in which the base section projects from the cover and a direction in which the holddown section projects from the base section.

16. The lighting device according to any one of claims 3 to 15, wherein the holddown section has a maximum dimension measuring in a direction in which the base section projects from the cover and a direction in which the holddown section projects from the base section, the maximum dimension being smaller than the light source.

17. The lighting device according to any one of claims 2 to 16, wherein
the electrode is arranged such that at least a part thereof is closer to the middle of the light source than the cover, and
the base section is arranged so as to overlap the electrode.

18. The lighting device according to claim 17, wherein the base section has a dimension measuring in a direction perpendicular to a direction in which the base section projects from the cover and a direction in which the holddown section projects from the base section, the dimension being larger than the electrode.

19. The lighting device according to claim 18, wherein the base section is formed such that the dimension measuring in the direction perpendicular to the direction in which the base section extends from the cover and the direction in which the holddown section projects from the base section is larger than the light source.

20. The lighting device according to any one of claims 2 to 19, wherein the base section is formed such that the dimension measuring in the direction in which the base section projects from the cover and the direction in which the holddown section projects from the base section is larger than the holddown section.

21. The lighting device according to claim 20, wherein the base section has an umbrella-like shape covering the holddown section.

22. The lighting device according to claim 21, wherein the base section has a surface on an opposite side from the light source shaped along an outline of the light source.

23. The lighting device according to claim 22, wherein the base section has a surface on a light source side formed along the outline of the light source.

24. The lighting device according to any one of claims 2 to 23, wherein the base section projects closer to the middle of the light source than the holddown section.

25. The lighting device according to any one of claims 1 to 24, wherein the cover has an opening in a surface facing toward the middle of the light source at a location off at least the light source with respect to a direction perpendicular to a direction in which the light source holddown member projects from the cover and a direction in which the light source holding member and the light source are arranged.

26. The lighting device according to claim 25, wherein the light source includes a plurality of light sources arranged parallel to one another in the direction perpendicular to the direction in which the light source holddown member projects from the cover and the direction in which the light source holddown member and the light source are arranged, and
the opening is formed in an area extending over the adjacent light sources.

27. The lighting device according to any one of claims 25 and 26, wherein the opening is formed in an area with a dimension same as a dimension of an area in which the light sources are arranged, the dimensions measuring in the direction perpendicular to the direction in which the light source holddown member projects from the cover and the direction in which the light source holddown member and the light source are arranged, the opening being formed such that a clearance is provided between an opening edge of the opening and the light sources with respect to the direction in which the light source holddown member and the light source are arranged.

28. The lighting device according to any one of claims 1 to 27, further comprising a connector, wherein
the light source has an outer lead at the end, the outer lead being connected to the electrode and projecting to an outside, and
the connector is connected to the outer lead.

29. The lighting device according to claim 28, wherein the connector includes a terminal in contact with the outer lead; and
the light source holddown member and the light source are arranged substantially along a direction in which the outer lead is inserted into or removed from the terminal.

30. The lighting device according to any one of claims 1 to 29, further comprising a chassis housing the light source and the cover, wherein
the light source includes a plurality of linear light sources arranged parallel to one another inside the chassis, and
the light source holddown member includes a plurality of light source holddown members arranged parallel to one another on the cover according to an arrangement of the linear light sources and attached to an end portion of the chassis.

31. The lighting device according to claim 30, further comprising an optical member, wherein
the chassis has an opening through which light exits, the optical member is arranged so as to cover the opening, and
the cover has an optical member holding portion on which the optical member is placed.

32. The lighting device according to any one of claims 1 to 31, wherein the cover has light reflectivity.

33. The lighting device according to claim 32, further comprising a chassis housing the light source and the cover, wherein the cover has a sloped portion projecting toward the middle of the light source and sloped toward a bottom surface of the chassis.

34. A display device comprising:
the lighting device according to any one of claims 1 to 33; and
a display panel configured to provide display using light from the lighting device.

35. The display device according to claim 34, wherein the display panel is a liquid crystal display including a pair of substrates with liquid crystals sealed therebetween.

36. A television receiver comprising the display device according to any one of claims 34 and 35.
